(19)

Europäisches
Patentamt

European
Patent Office

Office européen
des brevets

(11) **EP 3 046 388 B1**

(12) **EUROPEAN PATENT SPECIFICATION**

(45) Date of publication and mention
of the grant of the patent:
**29.04.2020 Bulletin 2020/18**

(21) Application number: **13893604.2**

(22) Date of filing: **10.09.2013**

(51) Int Cl.:
**H04W 74/08** *(2009.01)*    *H04W 72/10* *(2009.01)*

(86) International application number:
**PCT/CN2013/083229**

(87) International publication number:
**WO 2015/035560 (19.03.2015 Gazette 2015/11)**

(54) **METHOD AND APPARATUS FOR SENDING CHANNEL ACCESS PARAMETER**

VERFAHREN UND VORRICHTUNG ZUM SENDEN VON KANALZUGANGSPARAMETERN

PROCÉDÉ ET APPAREIL POUR ENVOYER UN PARAMÈTRE D'ACCÈS AU CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.07.2016 Bulletin 2016/29**

(73) Proprietor: **Huawei Technologies Co., Ltd.
Longgang District
Shenzhen, Guangdong 518129 (CN)**

(72) Inventors:
 • **TAO, Yuan
  Shenzhen
  Guangdong 518129 (CN)**
 • **YANG, Xun
  Shenzhen
  Guangdong 518129 (CN)**

 • **ZHAO, Mu
  Shenzhen
  Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
 **CN-A- 101 558 606     CN-A- 102 413 579
 CN-A- 102 740 497     US-A1- 2008 144 588
 US-A1- 2009 279 427    US-A1- 2009 279 427
 US-B1- 6 813 260**

**Description**

**FIELD**

The disclosure relates to the technical field of communication technology, and in particularly to a method for transmitting a channel access parameter and a device thereof.

**BACKGROUND**

The 802.11-based wireless local area network (Wireless Local Area Network, abbreviated as WLAN) is originally developed to replace the Ethernet to accommodate indoor environments. However, it is also now widely deployed in public places. Compared with a WLAN deployed in the indoor environment, a WLAN widely deployed in the public place exhibits many new properties. For example, the WLAN may have multiple owners, may be generated when driven by a service, and may be generated and may disappear at any time.

Currently, in the WLAN, loads borne by the network may be classified into voice (Voice, abbreviated as VO), video (Video, abbreviated as VI), best-effort (Best-Effort, abbreviated as BE) and background (Background, abbreviated as BK) according to a service type of the load; or may be prioritized according to the type of the device. The 802.11 standard specifies an enhanced distributed channel access (Enhanced Distributed channel access, abbreviated as EDCA) mechanism, where different priorities are determined according to service types to enable services with different quality of service (Quality of Service, abbreviated as QoS) requirements to contend for a channel based on different priorities thus services with high QoS requirements may be guaranteed. However, in view of new properties of the WLAN which have emerged lately, the existing channel access method based on the service type is insufficient to meet the QoS requirement of a user.

US 2009/279427 A1 describes that access priority for wireless devices located in an area in which radiofrequency (RF) coverage areas of a first wireless access point and a second wireless access point overlap is controlled by coordinating operation of the first wireless access point and the second wireless access point. The wireless devices access a common RF channel via a collision sense multiple access/collision avoidance mechanism. The probability of accessing the RF channel may be varied by adjusting the length of interframe spacings and the length of contention windows. The length of the interframe spacings and the length of the contention windows associated with the first access point and associated with the second access point are configured such that the probability of wireless devices associated with the first wireless access point accessing the RF channel is greater than the probability of wireless devices associated with the second wireless access point accessing the RF channel.

US 2008/144588 A1 describes wireless communication device and a method and of prioritizing services in a wireless local area network. The method includes defining a first priority of a first service of a first basic service set of a wireless local area network and defining a second priority of a second service of a second basic service set of the wireless local area network, wherein the first priority is different from the second priority.

**SUMMARY**

A method for transmitting channel access parameter set and a device thereof are provided according to the embodiments of the disclosure to meet a QoS requirement of a user when a device performs channel access.

In a first aspect, it is provided a method for transmitting a channel access parameter set, which includes:

determining the channel access parameter set to be used by a first device in a first basic service set BSS for accessing a channel according to at least one priority parameter, where the channel access parameter set is used for indicating a priority of the first device to access the channel among all devices that contend for accessing the channel, and the at least one priority parameter includes a priority of each of BSSs including devices that contend for accessing the channel; and

transmitting the channel access parameter set to the first device to enable the first device to perform channel access based on the channel access parameter set,

where, the channel access parameter set may include a distributed coordination function interframe space DIFS and a contention window CW.

On the basis of the above implementation, optionally, the at least one priority parameter may include only the priority of each of the BSSs including the devices that contend for accessing the channel; and
determining the channel access parameter set to be used by a first device in a first basic service set BSS for channel access according to at least one priority parameter includes:

determining a value and a first numerical range of the DIFS according to a ranking of the priority of the first BSS among the priorities of the BSSs including the devices that contend for accessing the channel, and setting the CW to an arbitrary value in the first numerical range, where a high ranking of the priority of the first BSS among the priorities of the BSSs including the devices that contend for accessing the channel corresponds to a small DIFS value and a small first numerical range; or

assigning a value to the DIFS according to an equation DIFS_Value = IFSN_BSS_Priority * aSlotTime + aSIFSTime, and determining a second numerical range according to the ranking of the priority of the first BSS among the priorities of all the BSSs including the devices that contend for accessing the channel, and setting the CW to an arbitrary value in the second numerical value, where a high ranking of the priority of the first BSS among the priorities of the BSSs including the devices that contend for accessing the channel corresponds to a small second numerical range, where

DIFS Value indicates a value of the DIFS;

IFSN_BSS_Priority indicates an interframe coefficient corresponding to the priority of the first BSS, where a high priority of the first BSS corresponding to a small interframe coefficient;

aSlotTime indicates a length of a time slot; and

aSIFSTime indicates a length of a SIFS time.

On the basis of the above implementation, optionally, the at least one priority parameter may further include a priority of a service borne by each of the devices that contend for accessing the channel.

On the basis of the above implementation, optionally, determining the channel access parameter set to be used by a first device in a first basic service set BSS for accessing a channel according to at least one priority parameter may include:

determining the channel access parameter set for a service borne by the first device according to the ranking of the priority of the first BSS among the priorities of the BSSs including the devices that contend for accessing the channel in a case that the priority of the first BSS including the first device is different from a priority of the BSS including the other devices that contend for accessing the channel, where a high ranking of the priority of the first BSS among the priorities of the BSSs including the devices that contend for accessing the channel corresponds to a high priority of the first device to access the channel which is indicated by the channel access parameter set; or

determining the channel access parameter set for a service borne by each of the devices that contend for accessing the channel according to the priority of the service borne by the first device and priorities of services borne by the other devices that contend for accessing the channel in a case that the priority of the first BSS including the first device is the same as the priorities of the other devices that contend for accessing the channel, where a high priority of the service borne by the first device corresponds to a high priority of the first device to access the channel which is indicated by the channel access parameter set.

On the basis of the above implementation, optionally, determining the channel access parameter set to be used by a first device in a first basic service set BSS for accessing a channel according to at least one priority parameter may include:

determining the channel access parameter set for a service borne by the first device according to the ranking of the priority of the service borne by the first device among the priorities of services borne by the devices that contend for accessing the channel in a case that the priority of the service borne by the first device is different from the priorities of services borne by the other devices that contend for accessing the channel, where a high ranking of the priority of the service borne by the first device among the priorities of services borne by the devices that contend for accessing the channel corresponds to a higher priority of the first device to access the channel which is indicated by the channel access parameter set; or

determining the channel access parameter set for a service borne by the first device according to the ranking of the priority of the first BSS among the priorities of the BSSs including the devices that contend for accessing the channel in a case that the priority of the service borne by the first device is the same as priorities of services borne by the other devices that contend for accessing the channel, where a high ranking of the priority of the first BSS among the priorities of the BSSs including the devices that contend for accessing the channel corresponds to a high priority of the first device to access the channel which is indicated by the channel access parameter set.

On the basis of the above implementation, optionally, determining the channel access parameter set to be used by a first device in a first basic service set BSS for accessing a channel according to at least one priority parameter may include:
determining a channel access priority corresponding to a service borne by each of the devices that contend for accessing the channel according to the priority of the BSS including the device that contends for accessing the channel and a priority of the service borne by the device that contends for accessing the channel, and determining the channel access parameter set for a service borne by the first device according to a ranking of a channel access priority corresponding to the service borne by the first device among channel access priorities corresponding to services borne by the devices that contend for accessing the channel, where a high ranking of the channel access priority corresponding to the service borne by the first device among the channel access priorities corresponding to services borne by the devices that contend for accessing the channel corresponds to a high priority of the first device to access the channel which is indicated by the channel access parameter set.

On the basis of the above implementation, optionally, the transmitting the channel access parameter set to the first device to enable the first device to perform channel access based on the channel access parameter set may include:

adding an information element IE to a probe response frame, an association/reassociation response frame or a beacon frame, and transmitting the channel access parameter set to the first device with the added IE to enable the first device to perform channel access based on the channel access parameter set; or

extending or reusing an existing IE of a probe response frame, an association/reassociation response frame or a beacon frame, and transmitting the channel access parameter set to the first device with the extended or reused IE to enable the first device to perform channel access based on the channel access parameter set.

In a second aspect, it is provided a device for transmitting a channel access parameter set, which includes:

a determination module configured to determine the channel access parameter set to be used by a first device in a first basic service set BSS for accessing a channel according to at least one priority parameter, where the channel access parameter set is used for indicating a priority of the first device to access the channel among all devices that contend for accessing the channel, and the at least one priority parameter includes a priority of each of BSSs including devices that contend for accessing the channel; and

a transmission module configured to transmit the channel access parameter set determined by the determination module to the first device to enable the first device to perform channel access based on the channel access parameter set,

where, the channel access parameter set may include a distributed coordination function interframe space DIFS and a contention window CW.

On the basis of the above implementation, optionally, the at least one priority parameter may include only the priority of each of the BSSs including the devices that contend for accessing the channel; and
the determination module is configured to determine a value and a first numerical range of the DIFS according to a ranking of the priority of the first BSS among the priorities of all the BSSs including the devices that contend for accessing the channel, and set the CW to an arbitrary value in the first numerical range, where a high ranking of the priority of the first BSS among the priorities of the BSSs including the devices that contend for accessing the channel corresponds to a small DIFS value and a small first numerical range; or
the determination module is configured to assign a value to the DIFS according to an equation DIFS_Value = IFSN_BSS_Priority * aSlotTime + aSIFSTime, and determine a second numerical range according to the ranking of the priority of the first BSS among the priorities of the BSSs including the devices that contend for accessing the channel, and set the CW to an aribitrary value in the second numerical value, where a high ranking of the priority of the first BSS among the priorities of the BSSs including the devices that contend for accessing the channel corresponds to a small second numerical range, where
DIFS Value indicates a value of the DIFS;
IFSN_BSS_Priority indicates an interframe coefficient corresponding to the priority of the first BSS, where a high priority of the first BSS corresponding to a small interframe coefficient;
aSlotTime indicates a length of a time slot; and

aSIFSTime indicates a length of a SIFS time.

On the basis of the above implementation, optionally, the at least one priority parameter may further include a priority of a services borne by each of the devices that contend for accessing the channel.

On the basis of the above implementation, optionally, the determination module may be configured to determine the channel access parameter set for a service borne by the first device according to the ranking of the priority of the first BSS among the priorities of the BSSs including the devices that contend for accessing the channel in a case that the priority of the first BSS including the first device is different from a priority of the BSS including the other devices that contend for accessing the channel, where a high ranking of the priority of the first BSS among the priorities of the BSSs including the devices that contend for accessing the channel corresponds to a high priority of the first device to access the channel which is indicated by the channel access parameter set; or determine the channel access parameter set for a service borne by each of the devices that contend for accessing the channel according to the priority of the borne by the first device and priorities of services borne by the other devices that contend for accessing the channel in a case that the priority of the first BSS including the first device is the same as the priorities of the other devices that contend for accessing the channel, where a high priority of the service borne by the first device corresponds to a high priority of the first device to access the channel which is indicated by the channel access parameter set.

On the basis of the above implementation, optionally, the determination module may be configured to determine the channel access parameter set for a service borne by the first device according to the ranking of the priority of the service borne by the first device among the priorities of services borne by the devices that contend for accessing the channel in a case that the priority of the service borne by the first device is different from the priorities of services borne by the other devices that contend for accessing the channel, where a high ranking of the priority of the service borne by the first device among the priorities of services borne by the devices that contend for accessing the channel corresponds to a high priority of the first device to access the channel which is indicated by the channel access parameter set; or determine the channel access parameter set for a service borne by the first device according to the ranking of the priority of the first BSS among the priorities of the BSSs including the devices that contend for accessing the channel in a case that the priority of the service borne by the first device is the same as priorities of services borne by the other devices that contend for accessing the channel, where a high ranking of the priority of the first BSS among the priorities of the BSSs including the devices that contend for accessing the channel corresponds to a high priority of the first device to access the channel which is indicated by the channel access parameter set.

On the basis of the above implementation, optionally, the determination module may be configured to determine a channel access priority corresponding to a service borne by each of the devices that contends for accessing the channel according to the priority of the BSS including the device that contends for accessing the channel and a priority of the service borne by the device that contends for accessing the channel, and determine the channel access parameter set for a service borne by the first device according to a ranking of a channel access priority corresponding to the service borne by the first device among channel access priorities corresponding to services borne by the devices that contend for accessing the channel, where a high ranking of the channel access priority corresponding to the service borne by the first device among the channel access priorities corresponding to services borne by the devices that contend for accessing the channel corresponds to a high priority of the first device to access the channel which is indicated by the channel access parameter set.

On the basis of the above implementation, optionally, the transmission module may be configured to add an information element IE to a probe response frame, an association/reassociation response frame or a beacon frame, and transmit the channel access parameter set to the first device with the added IE to enable the first device to perform channel access based on the channel access parameter set; or

the transmission module may be configured to extend or reuse an existing IE of a probe response frame, an association/reassociation response frame or a beacon frame, and transmit the channel access parameter set to the first device with the extended or reused IE to enable the first device to perform channel access based on the channel access parameter set.

In a third aspect, it is provided a device for transmitting channel access parameter, which includes:

a processor configured to determine a channel access parameter set to be used by a first device in a first basic service set BSS for accessing a channel according to at least one priority parameter, where the channel access parameter set is used for indicating a priority of the first device to access the channel among all devices that contend for accessing the channel, and the at least one priority parameter includes a priority of each of BSSs including devices that contend for accessing the channel; and

a transmitter configured to transmit the channel access parameter set determined by the processor to the first device to enable the first device to perform channel access based on the channel access parameter set.

With the method for transmitting channel access parameter and the device thereof, the channel access parameter set is determined for the first device based on the at least one priority parameter including the priority of each of the BSSs including the devices that contend for accessing the channel to enable the first device to perform channel access according to the channel access parameter set thereby providing QoS guaranties for the first device.

## BRIEF DESCRIPTION OF THE DRAWINGS

In order to illustrate the technical solutions according to the embodiments of the present disclosure or in the conventional art more clearly, drawings to be used in the description of the embodiments or the conventional art will be described briefly hereinafter. Apparently, the drawings described hereinafter are only some embodiments of the present disclosure, and other drawings may be obtained by those skilled in the art according to those drawings without creative labor.

Figure 1 is a flow chart of a method for transmitting a channel access parameter according to an embodiment of the disclosure;

Figure 2 is a schematic diagram of priorities of devices that contend for accessing a same channel to access the channel according to an embodiment of the disclosure;

Figure 3 is a schematic diagram of priorities of devices that contend for accessing a same channel to access the channel according to another embodiment of the disclosure;

Figure 4 is a schematic diagram of priorities of devices that contend for accessing a same channel to access the channel according to yet another embodiment of the disclosure;

Figure 5 is a schematic structural diagram of an IE bearing a channel access parameter set according to an embodiment of the disclosure;

Figure 6 is a schematic structural diagram of an IE bearing a channel access parameter set according to another embodiment of the disclosure;

Figure 7 is a schematic structural diagram of an IE bearing a channel access parameter set according to yet another embodiment of the disclosure;

Figure 8 is a schematic structural diagram of a device for transmitting a channel access parameter according to an embodiment of the disclosure; and

Figure 9 is a schematic structural diagram of a device for transmitting a channel access parameter according to another embodiment of the disclosure.

## DETAILED DESCRIPTION OF THE EMBODIMENTS

To illustrate the objects, technical solutions and advantages of the present disclosure more clearly, the technical solutions in the embodiments of the present disclosure will be described clearly and completely hereinafter in conjunction with the drawings in the embodiments of the present disclosure. Apparently, the described embodiments are only some but not all of the embodiments of the present disclosure. All the other embodiments obtained by those ordinary skilled in the art based on the embodiments of the present disclosure without creative effort fall within the scope of protection of the present disclosure.

In the embodiments of the disclosure, firstly, a concept of prioritizing basic service sets (Basic service set, abbreviated as BSS) in a wireless local area network and a method for identifying and setting a priority of the BSS are provided. The BSS with a higher priority indicates that a device included in the BSS has priority over other BSSs to use or occupy a certain frequency spectrum resource. Secondly, a method for transmitting a channel access parameter based on the priority of the BSS is provided according to the embodiments of the disclosure. Hereinafter, information associated with the priority of the BSS is described.

Priorities of BSSs are determined for each of the BSSs. Different BSSs have different priorities, and the priority of one BSS varies according to different policies performed by the BSS. For example, in a case of access control, a BSS may have a highest priority, which indicates various devices in the BSS may have priority to use a channel; however, in a case of channel switching, the BSS may have a lowest priority, which indicates the BSS may be demanded to switch a channel by a BSS with a higher priority, thus the priority may be determined flexibly according to the policy to be performed by the BSS.

The priority of the BSS may be identified by a data frame or a set of data frames. As an example, the priority of the BSS may be determined using the number of associated users in the BSS, the number of active users in the BSS or specified data related to channel selection. As another example, the priority of the BSS may be determined using both the number of associated users in the BSS and the number of active users in the BSS. For example, the BSS with larger number of active users has a higher priority; the BSS with larger number of associated users has a higher priority, in a case of BBSs with a same number of active users. Besides the above examples, the priority of the BSS may be determined using all of the number of associated users in the BSS, the number of active users in the BSS and the specified data related to channel selection. Further, besides the number of associated users in the BSS, the number of active users in the BSS and the specified data related to channel selection, other data may be used to determine the priority of the BSS.

The priority of the BSS may be carried by an access point (Access Point, abbreviated as AP) and a station (Station, abbreviated as STA) of the BSS. That is, Priorities of an AP and a STA in a BSS with a higher priority have higher priorities over an AP and a STA in a BSS with a lower priority. The priority of the BSS is a property of the BSS and carried by various devices in the BSS. A device does not have a corresponding priority after leaving its current BSS.

Based on the above definition, a method for determining a priority of a cell is provided according to the embodiments of the disclosure, which includes:

acquiring, by a priority determination unit, a parameter of each of BSSs or a policy required for determining a priority; and determining, by the priority determination unit, the priority of each of the BSSs, according to the parameter of each of the BSSs or the policy.

Preferably, the priority determination unit may be an access controller (Access Controller, abbreviated as AC) but not limited thereto. Hereinafter, the priority determination unit is described herein as the AC by way of example.

The priority of a cell is determined in a central control manner. Specifically, the priority of each of the BSSs is determined by the AC based on a predetermined parameter or a predetermined policy. The parameter required for determining the priority may varies depending on different application scenarios. As an example, in the application scenario of channel switching, the parameter required for determining the priority of the BSS may include lengths of cache queues corresponding to a downstream traffic stream and an upstream traffic stream to be transmitted in the BSS, a sum of lengths of cache queues corresponding to multiple traffic streams or the like. The longer the length of the cache queue corresponding to the traffic stream, the higher priority of BSS. As another example, in another application scenario, parameters required for determining the priority of the BSS may include the number of associated STAs, traffic, the number of active STAs, etc. The policy required for determining the priority may be determined based on information such as payment information of STAs in each of the BSSs or information of an operator of each of the BSSs.

After determining the priority of each of the BSSs, the AC may transmit the priority of the BSS to the AP in the BSS to enable the AP to acquire the priority of the BSS including the AP and perform a corresponding operation based on the priority of the BSS.

Based on the above definition, a method for determining a priority of a cell is provided according to the embodiments of the disclosure, which includes: acquiring, by an AP, a priority of a neighbor BSS and a value of a parameter used for determining the priority of the neighbor BSS; determining, by the AP, a priority of a BSS including the AP according to a value of a parameter of the BSS including the AP, the priority of the neighbor BSS and the value of the parameter used for determining the priority of the neighbor BSS.

The priority of the cell is determined in a distributed manner. Specifically, the priority of the BSS including the AP is determined by the AP according to the priority of the neighbor BSS, the value of the parameter used for determining the priority of the neighbor BSS, and the value of the parameter of the BSS including the AP. Optionally, before acquiring the priority of the neighbor BSS, the AP may transmit a priority acquisition request to an AC or an AP in the neighbor BSS to request the priority of the neighbor BSS and the value of the parameter used for determining the priority of the neighbor BSS, and receive a reply message returned by the AC or the AP in the neighbor BSS, from which the AP may acquire the priority of the neighbor BSS and the value of the parameter used for determining the priority of the neighbor BSS.

An STA in the BSS may acquire the priority of the BSS in an active manner and in a positive manner.

In a case that the STA in the BSS acquires the priority of the BSS in the active manner, the STA transmits a priority request message to the AP, where the priority request message may be a new command or a new field included in a control frame, a management frame or a data frame. For example, the priority request message may be carried in an association request or a probe request (probe request). The priority request message includes information such as an ID of the BSS and other associated parameters. The AP feeds back the priority of the BSS to the STA on reception of the priority request message.

In a case that the STA in the BSS acquires the priority of the BSS in the positive manner, the AP broadcasts information about the priority of the BSS in a beacon (beacon) frame, a management frame, a control frame or a data frame. The STA receives the broadcasted beacon frame, management frame, control frame or data frame, from which the STA acquires the priority information of the current BSS.

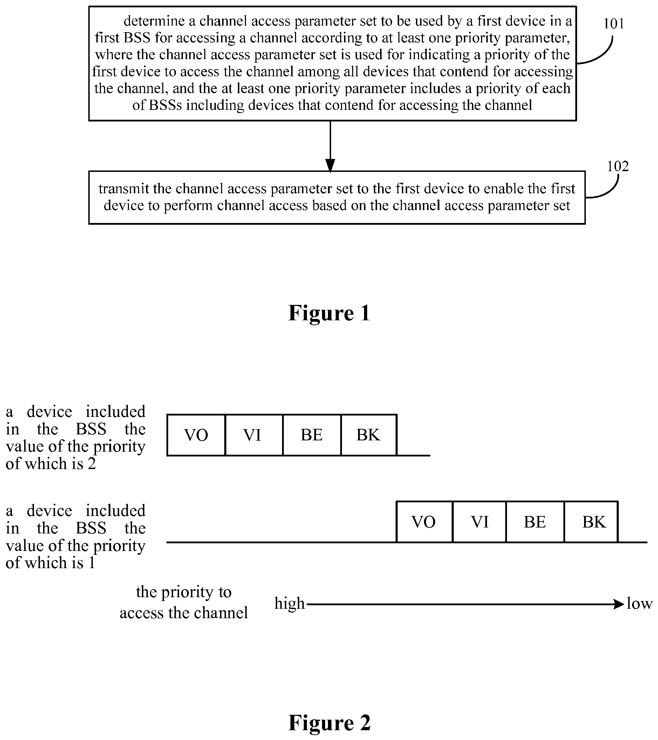

On the basis of the above priority of the BSS, a method for transmitting a channel access parameter is further provided according to the embodiments of the disclosure to enable a device such as the STA to perform channel access based on the channel access parameter set. As shown in Figure 1, the method for transmitting the channel access parameter includes the following steps 101 and 102.

In step 101, a channel access parameter set to be used by a first device in a first BSS for channel access is determined according to at least one priority parameter, where the channel access parameter set is used for indicating a priority of the first device to access a channel among all devices that contend for accessing the channel, and the at least one priority parameter includes priorities of BSSs including devices that contend for accessing the channel.

In step 102, the channel access parameter set is transmitted to the first device to enable the first device to perform channel access based on the channel access parameter set.

In this embodiment, before performing channel access, a device in the BSS which prepares to perform channel access such as the STA needs to receive the channel access parameter set issued by the AP and perform channel access based on the channel access parameter set, where the channel access parameter set is a set of parameters to be used during channel access. The procedure of channel access performed by the device in the BSS based on the channel access parameter set can be referred to existing technologies and will not be described in detail herein.

In this embodiment, to facilitate description, the device which prepares to perform channel assess is referred to as the first device, and the BSS including the first device is referred to as a first BSS, where the first device contends for accessing the channel. It should be noted that the first device may be a signal device or multiple devices.

To accommodate new properties of the WLAN, the priority of the BSS is used as one of the factors considered when determining channel access parameter set for the first device. The factors considered when determining channel access parameter set for the first device are referred to as priority parameters. Based on this, the AP in the first BSS may determine the channel access parameter set used by the first device in the first BSS for performing channel access based on at least one priority parameter. In this embodiment, the at least one priority parameter includes the priorities of BSSs including devices that contend for accessing the channel, and the channel access parameter set determined based on the at least one priority parameter is used for indicating a priority of the first device to access a channel among all devices that contend for accessing the channel.

After determining the channel access parameter set to be used by the first device for channel access, the AP transmits the channel access parameter set to the first device to enable the first device to perform channel access based on the channel access parameter set.

In this embodiment, the channel access parameter set is determined for the first device based on the at least one priority parameter including the priorities of BSSs including devices that contend for accessing a same channel to enable the first device to perform channel access based on the channel access parameter set and enable the BSSs with different priorities may access the channel collaboratively, thus the QoS requirement of the first device may be satisfied and new properties of the WLAN may be accommodated.

It should be noted that, the channel access parameter set varies according to application scenarios or network structures. For example, in an application scenario where a distributed coordination function (Distributed Coordination Function, abbreviated as DCF) mechanism is applied, the channel access parameter set may include a DCF interframe space (DIFS) and a contention window CW (Contention Window, abbreviated as CW). The DIFS indicates the length of time for which the first BSS performs channel access, and the CW indicates a size of the contention window of the first BSS. Specifically, the length of time required for channel access may be changed by changing values of the DIFS and the CW, and the length of time required for channel access may represent the priority to access the channel, where a large probability of short length of time required for channel access indicates a high priority to access the channel.

The priority of the first device to access the channel may be determined using a function A which includes at least one priority parameter which may be indicated by B, C, D, ... Then the function can be expressed as A=F(B, C, D, ...).

In an optional embodiment, in a case that only the priority of the BSS is present, the priority of the first device to access the channel is determined only according to the priority of the BSS. Assuming that B indicates the priority of the BSS, the function may be expressed as A=F(B). In this embodiment, B includes the priorities of BSSs including devices that contend for accessing the channel, that is, the at least one priority parameter includes only the priorities of the BSSs including the devices that contend for accessing the channel.

Further, based on the above DIFS and CW, one embodiment of step 101 may include: determining a value and a first numerical range of the DIFS according to a ranking of the priority of the first BSS among the priorities of all the BSSs including the devices that contend for accessing the channel, and setting the CW to an arbitrary value in the first numerical range; where a higher ranking of the priority of the first BSS among the priorities of all the BSSs including the devices that contend for accessing the channel corresponds to a smaller DIFS value and a smaller first numerical range. In this embodiment, a value corresponding to the ranking of the priority of each of the BSSs is predetermined. For the ranking of the priority of each of the BSSs, the value is a fixed value, and the higher ranking is, the smaller value is. Based on this, when the ranking of the priority of the first BSS including the first device among the priorities of all the BSSs including the devices that contend for accessing the channel is determined, a value corresponding to the ranking may be acquired as the value of the DIFS. For example, the highest ranking corresponding to a value 0.1, and the lowest ranking corresponds to a value 0.5, if the ranking of the priority of the first BSS including the first device among the priorities of all the BSSs including the devices that contend for accessing the channel is the highest ranking, the value of the DIFS is 0.1; and if the ranking of the priority of the first BSS including the first device among the priorities of all the BSSs including the devices that contend for accessing the channel is the lowest ranking, the value of the DIFS is 0.5. However, the embodiments of the disclosure are not limited thereto. As can be seen, if the ranking of the priority of the first BSS including the first device among the priorities of all the BSSs including the devices that contend for accessing the channel is determined, the value of the DIFS is a fixed value such as 0.1 seconds (s) or 0.5s. The value of the CW is an arbitrary value in a numerical range such as the numerical range [0, 0.1]. A higher ranking of the priority of the first BSS among the priorities of all the BSSs including the devices that contend for accessing the channel corresponds to a higher priority of the first BSS, which indicates that a larger probability of the CW to acquire a short length of time is better. Therefore, the first numerical range for the CW to take its value is small. In summary, a higher ranking of the priority of the first BSS among the priorities of all the BSSs including the devices that contend for accessing the channel corresponds to a smaller DIFS value and a smaller first numerical range, which indicates a larger probability of short length of time required for the first device to perform channel access and indicates a higher priority of the first device to access the channel.

Further, based on the above DIFS and CW, an embodiment of step 101 may include: assigning a value to the DIFS according to an equation (1), and determining a second numerical range according to the ranking of the priority of the first BSS among the priorities of all the BSSs including the devices that contend for accessing the channel, and setting the CW to an arbitrary value in the second numerical range; where a higher ranking of the priority of the first BSS among the priorities of all the BSSs including the devices that contend for accessing the channel corresponds to a smaller second numerical range,

$$DIFS\_Value = IFSN\_BSS\_Priority * aSlotTime + aSIFSTime \qquad (1)$$

where DIFS Value indicates a value of the DIFS; IFSN_BSS_Priority indicates an interframe coefficient corresponding to the priority of the first BSS. A higher priority of the first BSS corresponding to a shorter length of time required for channel access and a smaller product of IFSN_BSS_Priority and aSlotTime. That is, a higher priority of the first BSS corresponding to a smaller interframe coefficient; aSlotTime indicates a length of a time slot; and aSIFSTime indicates a length of a SIFS time. In this embodiment, the value of the CW is an arbitrary value in the second numerical range. A higher ranking of the priority of the first BSS among the priorities of all the BSSs including the devices that contend for accessing the channel corresponds to a higher priority of the first BSS, which indicates that a larger probability of the CW to acquire a short length of time is better. Therefore, the first numerical range for the CW to take its value is required to be small.

In another optional embodiment, in a case of performing channel access by combining the priority of the BSS and a priority of a service, the priority of the first device to perform channel may be determined according to both the priority of the BSS and the priority of the service. Assuming that B indicates the priority of the BSS, and C indicates the priority of the service, the function may be expressed as A=F(B, C). In this embodiment, B includes the priorities of all the BSSs including devices the devices that contend for accessing the channel, and C includes priorities of all services borne by the devices that contend for accessing the channel. That is, the at least one priority parameter includes only the priorities of all the BSSs including devices the devices that contend for accessing the channel and the priorities of services borne by all devices that contend for accessing the channel, where the priority of the service may be determined according to a type of the service. For example, types of the service borne include but are not limited to: VO, VI, BE and BK. When ranked in a descending order according to the priority, these services are VO, VI, BE and BK.

In a case of performing channel assess according to a combination of the priority of the BSS and the priority of the service, an embodiment of step 101 may include:

determining the channel access parameter set for a service borne by the first device according to the ranking of the priority of the first BSS among the priorities of all the BSSs including the devices that contend for accessing the channel in a case that the priority of the first BSS including the first device is different from a priority of the BSS including the other devices that contend for accessing the channel, where a higher ranking of the priority of the first BSS among the priorities of all the BSSs including the devices that contend for accessing the channel corresponds to a higher priority of the first device to access the channel which is indicated by the channel access parameter set; or

determining the channel access parameter set for a service borne by each of the devices that contends for accessing the channel according to the priority of the service borne by the first device and priorities of services borne by the other devices that contend for accessing the channel in a case that the priority of the first BSS including the first device is the same as the priorities of the other devices that contend for accessing the channel, where a higher priority of the service borne by the first device corresponds to a higher priority of the first device to access the channel which is indicated by the channel access parameter set.

In this embodiment, firstly, the channel access parameter set is determined for the service borne by each of the devices that contends for accessing the channel based on the priorities of BSSs; then in a case that the BSSs have a same priority, the channel access parameter set is determined for the service borne by each of the devices based on the priority of the service borne by each of the devices. Specifically, in a case that the devices that contend for accessing the channel are included in BSSs with different priorities, it is indicated that these devices are included in different BSSs. For the devices in different BSSs that contend for accessing one channel, the priority of each of the device to access the channel is determined according to the priorities of the BSSs, and a higher priority of the BSS including the devices corresponds to a higher priority of the device to access the channel which is indicated by the channel access parameter set determined for the device for channel assess. For example, assuming that a larger value of the priority of a BSS indicates a higher priority of the BSS, a value 1 indicates the lowest priority of the BSS, the priority of a BSS which has a value of 4 is higher than the priority of a BSS which has a value of 2, the devices in a BSS with a larger value of the priority may be determined to have a higher priority to access the channel. For example, in a case that the first device and a second device contend for accessing the channel, where the value of the priority of the first BSS including the first device is 2, and a service borne by the first device is BK; while a value of the priority of a second BSS including the second device is 1, and a service borne by the second device is VO, the priority of the first device to access the channel for conducting the BK service is higher than the priority of the second device to access the channel for conducting the VO service. Roles of the priority of the BSS and the priority of the service in determination of the priority of each of the devices that contends for accessing a same channel are described more clearly in Figure 2.

In a case that the devices that contend for accessing the channel are included in the BSSs with a same priority, it may be indicated that these devices are included in one BSS. For the devices one BSS that contend for accessing one channel, the priority of each of the devices is determined by the priority of service borne by the device since the priorities of the BSS corresponding to the devices are the same. For example, the device bearing the VO service may have the priory over the device bearing the BE service to access the channel.

In a case of performing channel access according to a combination of the priority of the BSS and the priority of the service, another embodiment of step 101 may include:

determining the channel access parameter set for a service borne by the first device according to the ranking of the priority of the service borne by the first device among the priorities of services borne by all devices that contend for accessing the channel in a case that the priority of the service borne by the first device is different from the priorities of services borne by the other devices that contend for accessing the channel, where a higher ranking of the priority of the service borne by the first device among the priorities of services borne by all devices that contend for accessing the channel corresponds to a higher priority of the first device to access the channel which is indicated by the channel access parameter set; or

determining the channel access parameter set for a service borne by the first device according to the ranking of the priority of the first BSS among the priorities of all the BSSs including the devices that contend for accessing the channel in a case that the priority of the service borne by the first device is the same as priorities of services borne by the other devices that contend for accessing the channel, where a higher ranking of the priority of the first BSS among the priorities of all the BSSs including the devices that contend for accessing the channel corresponds to a higher priority of the first device to access the channel which is indicated by the channel access parameter set.

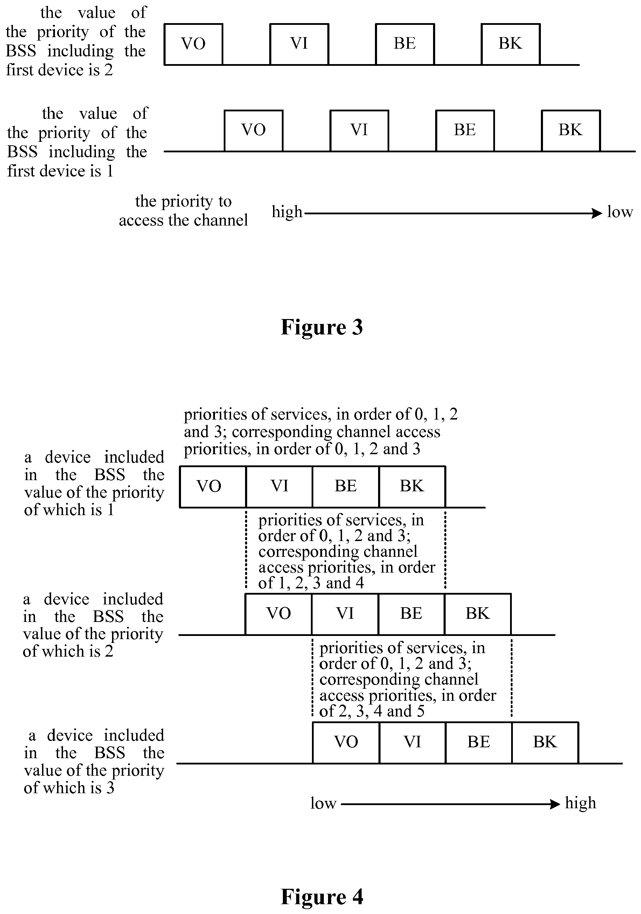

In this embodiment, firstly, the channel access parameter set is determined for the service borne by each of the devices that contends for accessing the channel based on the priority of the service; then in a case that the services have a same priority, the channel access parameter set is determined for the service borne by each of the devices based on the priorities of the BSSs including the devices. For example, in a case that the first device and a second device contend for accessing the channel, where the value of the priority of the first BSS including the first device is 2, and services borne by the first device are VO, VI, BE and BK; while a value of a priority of a second BSS including the second device is 1, and services borne by the second device are VO, VI, BE and BK. When ranked in a descending order according to the priority, these services are: the VO service of the first device, the VO service of the second device, the VI service of the first device, the VI service of the second device, the BE service of the first device, the BE service of the second device, the BK service of the first device, and the BK service of the second device, as shown in Figure 3.

In a case of performing channel access according to a combination of the priority of the BSS and the priority of the service, another embodiment of step 101 may include:

determining a channel access priority corresponding to a service borne by each of the devices that contend for accessing the channel according to the priority of the BSS including the device and a priority of the service borne by the device, and determining the channel access parameter set for a service borne by the first device according to a ranking of a channel access priority corresponding to the service borne by the first device among channel access priorities corresponding to services borne by all devices that contend for accessing the channel, where a higher ranking of the channel access priority corresponding to the service borne by the first device among the channel access priorities corresponding to services borne by all devices that contend for accessing the channel corresponds to a higher priority of the first device to access the channel which is indicated by the channel access parameter set.

In this embodiment, the priority of the BSS and the priority of the service are in the state of equality, and it is necessary to take into account the priority of the BSS and the priority of the service. For two devices included in BSSs with different priorities, priorities of the two devices to access the channel may be the same when determined according to the combination of the priority of the BSS and the priority of the service borne.

Optionally, the determining a channel access priority corresponding to a service borne by each of the devices that contends for accessing the channel according to the priority of the BSS including the device and a priority of the service borne by the device includes: performing a mathematical operation on the priority of the BSS including the device that contends for accessing the channel and the priority of the service borne by the device to obtain the channel access priority corresponding to the service borne by the device, where the mathematical operation includes but is not limited to addition, subtraction, multiplication and division.

Taking the first device as an example, assuming that the priority of the first BSS including the first device is N, and the priority of the service borne by the first device is M, the channel access priority corresponding to the service borne by the first device may be M+N, M+N-1 or the like. Similarly, assuming that the first device, a second device and a third device contend to access the same channel, the channel access priority corresponding to the service borne by the second device and the channel access priority corresponding to the service borne by the third device may be obtained in the same manner.

It should be noted that, each of the devices that contend for accessing the channel may bears one or more services. In a case that multiple services are borne by the device that contends for accessing the channel, the channel access priority corresponding to each of the services needs to be calculated with the above method thus the channel access parameter set used for the device to access the channel for bearing each of the services may be determined.

Assuming that a larger value of the priority of the BSS indicates a higher priority of the BSS; a value 1 indicates the lowest priority of the BSS; values of priorities of the VO service, the VI service, the BE service and the BK service are 0, 1, 2 and 3 respectively; and the channel access priority corresponding to each of the services is obtained by adding the priority of the BSS and the priority of the service. The relationship between channel access priorities of devices included in BSSs, the values of the priorities of which are 1, 2 and 3 respectively, to access the channel for bearing the VO service, the VI service, the BE service and the BK service are shown in Figure 4.

Optionally, in addition to the priority of the BSS and the priority of the service, the channel access priority of the device included in the BSS may vary according to other factors such as policies and prices. Therefore, the priority parameters for determining the channel access priority may include three or more parameters, the function may be expressed as $A=F(B, C, D, ...)$.

Based on the above embodiments, an embodiment of step 102 may include:

adding an information element (Information Element, abbreviated as IE) to a probe response (Probe Response) frame, an association/reassociation response (Association/ReAssociation Response) frame or a beacon (Beacon) frame, and transmitting the channel access parameter set to the first device with the added IE to enable the first device to perform channel access based on the channel access parameter set.

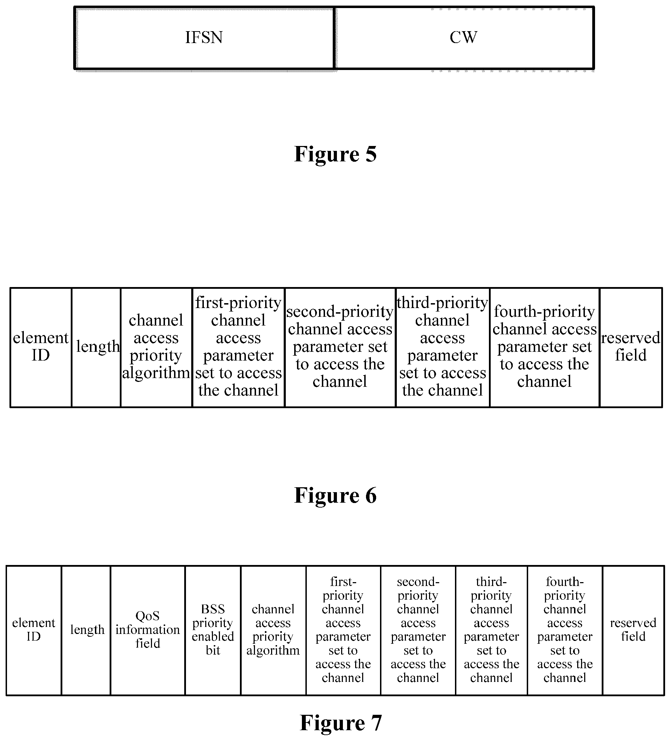

As an example, in a case that the channel access parameter set includes the DIFS and the CW, an IE may be added to the above probe response frame, the association/reassociation response frame or the beacon frame thus the DIFS and the CW may be carried by the added ID, as shown in Figure 5.

As another example, in a case that both the priority of the BSS and the priority of the service are present, an IE may be defined in the above probe response frame, the association/reassociation response frame or the beacon frame to carry the required channel access parameter set. The IE is only enabled in a case that the priority of the BSS is present. A structure of the IE is shown in Figure 6. As shown in Figure 6, a channel access priority algorithm (Priority Algorithm) field is used only when a BSS priority enabled bit is 1, where there may be a variety of channel access priority algorithms such as any one of the channel access priority algorithms provided according to the above embodiments. The channel access priority algorithm field is followed in sequence by a first-priority channel access parameter set to access the channel (First Priority Parameter Record) field, a second-priority channel access parameter set to access the channel (Second Priority Parameter Record) field, a third-priority channel access parameter set to access the channel (Third Priority Parameter Record) field, a fourth-priority channel access parameter set to access the channel (Fourth Priority Parameter Record) field, each of which may has a format defined in existing standards, for example, may include parameters such as AIFS, Cwmax, Cwmin, TXOP and Limit, and a reserved (Reserved) field. In a case that more priorities need to be implemented, the IE may be extended with the reserved field. In a case that only the priority of the BSS is present, and the number of priority levels of the BSS is less than 4, the reserved field may not be used.

Based on the above embodiments, an embodiment of step 102 may include:

extending or reusing an existing IE of a probe response frame, an association/reassociation response frame, or a beacon frame, and transmitting the channel access parameter set to the first device with the extended or reused IE to enable the first device to perform channel access based on the channel access parameter set.

For example, in a case of combining the priority of the BSS and the priority of the service, since an IE carrying a channel contention parameter set of four types of services (i.e., BK, BE, VI and VO) is defined in existing standards, the channel access parameter set according to the embodiments of the disclosure may be carried by reusing or extending the IE for carrying the channel contention parameter set of the four types of services in the prior art. The reused and extended IE is shown in Figure 7.

As shown in Figure 7, a BSS priority enabled (BSS Priority Enabled) bit is 1 in a case that the priority of the BSS is present; otherwise, the BSS priority enabled bit is 0. A channel access priority algorithm (Priority Algorithm) field is used only when the BSS priority enabled bit is 1, where there may be a variety of channel access priority algorithms such as any one of the channel access priority algorithms provided according to the above embodiments. The channel access priority algorithm (Priority Algorithm) field is followed in sequence by a first-priority channel access parameter set to access the channel (First Priority Parameter Record) field, a second-priority channel access parameter set to access the channel (Second Priority Parameter Record) field, a third-priority channel access parameter set to access the channel (Third Priority Parameter Record) field, a fourth-priority channel access parameter set to access the channel (Fourth Priority Parameter Record) field, each of which may has a format defined in existing standards, and a reserved (Reserved) field. In a case that more priorities need to be implemented, the IE may be extended with the reserved field. In a case that only the priority of the BSS is present, and the number of priority levels of the BSS is less than 4, the reserved field may not be used.

In summary, according to the embodiments of the disclosure, the channel access parameter set used by the devices that contend for accessing the same channel is determined according to the at least on priority parameter including the priorities of all the BSSs including the devices that contend for accessing the same channel, and the channel access parameter set is transmitted to the device performing channel access in various ways to enable the device to perform channel access according to a corresponding channel access parameter set, thus BSSs with different priorities may access the channel according to their priorities, the QoS requirement of the first device may be satisfied and new properties of the WLAN may be accommodated.

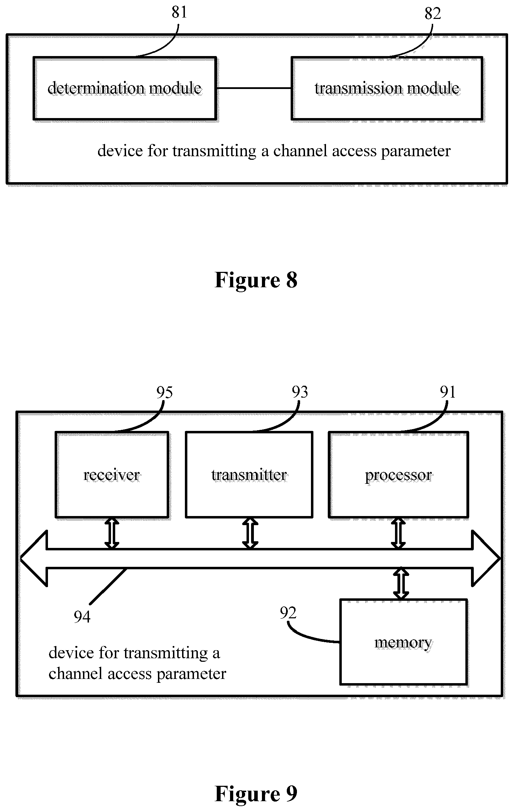

Figure 8 is a schematic structural diagram of a device for transmitting a channel access parameter according to an embodiment of the disclosure. As shown in Figure 8, the device includes a determination module 81 and a transmission module 82.

The determination module 81 is configured to determine a channel access parameter set to be used by a first device in a BSS for accessing a channel according to at least one priority parameter, where the channel access parameter set is used for indicating a priority of the first device to access the channel among all devices that contend for accessing the channel, and the at least one priority parameter includes a priority of each of BSSs including devices that contend for accessing the channel.

The transmission module 82 is connected with the determination module 81 and configured to transmit the channel access parameter set determined by the determination module 81 to the first device to enable the first device to perform channel access based on the channel access parameter set.

In an optional embodiment, the channel access parameter set according to the embodiment may include a DIFS and a CW.

In an optional embodiment, the at least one priority parameter according to the embodiment may include only the priority of each of the BSSs including the devices that contend for accessing the channel.

On the basis that the channel access parameter set includes the DIFS and the CW, in a case that the at least one priority parameter includes only the priority of each of the BSSs including the devices that contend for accessing the channel, the determination module 81 is configured to determine a value and a first numerical range of the DIFS and set the CW to an arbitrary value in the first numerical range according to a ranking of the priority of the first BSS among the priorities of all the BSSs including the devices that contend for accessing the channel, where a higher ranking of the priority of the first BSS among the priorities of all the BSSs including the devices that contend for accessing the channel corresponds to a smaller DIFS value and a smaller first numerical range; or the determination module 81 is configured to assign a value to the DIFS according to the equation (1), and determine a second numerical range and set the CW to an arbitrary value in the second numerical range according to the ranking of the priority of the first BSS among the priorities of all the BSSs including the devices that contend for accessing the channel, where a higher ranking of the priority of the first BSS among the priorities of all the BSSs including the devices that contend for accessing the channel corresponds to a smaller second numerical range. The description of the equation (1) may be found in above embodiments and is not repeated here.

In an optional embodiment, the at least one priority parameter may further includes a priority of a service borne by each of the devices that contends for accessing the channel. That is, the at least one priority parameter includes the priority of each of the BSSs including the devices that contend for accessing the channel and the priority of the service borne by each of the devices that contends for accessing the channel, where each of the devices that contend for accessing the channel may bear one or more services.

Based on the above, particularly, the determination module 81 may be configured to determine the channel access parameter set for a service borne by the first device according to the ranking of the priority of the first BSS among the priorities of all the BSSs including the devices that contend for accessing the channel in a case that the priority of the first BSS including the first device is different from a priority of the BSS including the other devices that contend for accessing the channel, where a higher ranking of the priority of the first BSS among the priorities of all the BSSs including the devices that contend for accessing the channel corresponds to a higher priority of the first device to access the channel which is indicated by the channel access parameter set; or determine the channel access parameter set for a service borne by each of the devices that contends for accessing the channel according to the priority of the service borne by the first device and priorities of services borne by the other devices that contend for accessing the channel in a case that the priority of the first BSS including the first device is the same as the priorities of the other devices that contend for accessing the channel, where a higher priority of the service borne by the first device corresponds to a higher priority of the first device to access the channel which is indicated by the channel access parameter set.

Alternatively, the determination module 81 may be configured to determine the channel access parameter set for a service borne by the first device according to the ranking of the priority of the service borne by the first device among the priorities of services borne by all devices that contend for accessing the channel in a case that the priority of the service borne by the first device is different from the priorities of services borne by the other devices that contend for accessing the channel, where a higher ranking of the priority of the service borne by the first device among the priorities of services borne by all devices that contend for accessing the channel corresponds to a higher priority of the first device to access the channel which is indicated by the channel access parameter set; or determine the channel access parameter set for a service borne by the first device according to the ranking of the priority of the first BSS among the priorities of all the BSSs including the devices that contend for accessing the channel in a case that the priority of the service borne by the first device is the same as priorities of services borne by the other devices that contend for accessing the channel, where a higher ranking of the priority of the first BSS among the priorities of all the BSSs including the devices that contend for accessing the channel corresponds to a higher priority of the first device to access the channel which is indicated by the channel access parameter set.

Alternatively, the determination module 81 may be configured to determine a channel access priority corresponding to a service borne by each of the devices that contend for accessing the channel according to the priority of the BSS including the device that contend for accessing the channel and a priority of the service borne by the device that contend for accessing the channel, and determine the channel access parameter set for a service borne by the first device according to a ranking of a channel access priority corresponding to the service borne by the first device among channel access priorities corresponding to services borne by all devices that contend for accessing the channel, where a higher ranking of the channel access priority corresponding to the service borne by the first device among the channel access priorities corresponding to services borne by all devices that contend for accessing the channel corresponds to a higher priority of the first device to access the channel which is indicated by the channel access parameter set.

In an optional embodiment, the transmission module 82 may be configured to add an IE to a probe response frame, an association/reassociation response frame or a beacon frame, and transmit the channel access parameter set to the first device with the added IE to enable the first device to perform channel access based on the channel access parameter set; or the transmission module 82 may be configured to extend or reuse an existing IE of a probe response frame, an association/reassociation response frame or a beacon frame, and transmit the channel access parameter set to the first device with the extended or reused IE to enable the first device to perform channel access based on the channel access parameter set.

Each of the function modules of the device for transmitting a channel access parameter according to the embodiment of the disclosure may be configured to perform the procedure of the method embodiment shown in Figure 1. The operation principle of each of the function modules may be found in the description of the method embodiment and will not be described herein.

The device for transmitting a channel access parameter according to the embodiments of the disclosure determines the channel access parameter set for the first device according to the at least one priority parameter including the priorities of all the BSSs including the devices that contend for accessing the same channel to enable the first device to perform channel access according to the channel access parameter set, thus BSSs with different priorities may access the channel according to their priorities, the QoS requirement of the first device may be satisfied and new properties of the WLAN may be accommodated.

Figure 9 is a schematic structural diagram of a device for transmitting a channel access parameter according to another embodiment of the disclosure. As shown in Figure 9, the device includes a processor 91, a memory 92 and a transmitter 93.

The memory 92 may include a read-only memory and a random access memory, and provide instructions and data to the processor 91. The memory 92 may also include a non-volatile random access memory (NVRAM).

The memory 92 stores the following elements, executable modules or data structures, or a subset or an extension set thereof:

operation instructions including various operation instructions for implementing various operations; and

an operating system including various system programs for implementing various basic services and processing hardware- based tasks.

According to the embodiments of the disclosure, the processor 91 is configured to:

determine a channel access parameter set to be used by a first device in a first BSS for channel access according to at least one priority parameter by invoking operation instructions stored in the memory 92 (the operation instructions may be stored in the operating system),

where the channel access parameter set is used for indicating a priority of the first device to access a channel among all devices that contend for accessing the channel, and the at least one priority parameter includes a priority of each of BSSs including devices that contend for accessing the channel.

The transmitter 93 is configured to transmit the channel access parameter set determined by the processor 91 to the first device to enable the first device to perform channel access based on the channel access parameter set.

Optionally, the device for transmitting a channel access parameter may further include a receiver 95.

The processor 91 controls the operation of the device for transmitting a channel access parameter. The processor 91 may also be referred to as a central processing unit (Central Processing Unit, abbreviated as CPU). The memory 92 may include a Read Only Memory and a Random Access Memory, and may provide instructions and data to the processor 91. The memory 92 may further include a Non-Volatile Random Access Memory (NVRAM). In specific applications, the various components of the device for transmitting a channel access parameter are coupled with each other by a bus system 94. In addition to a data bus, the bus system 94 may further include a power bus, a control bus and a state signal bus. For the sake of clarity, various buses are illustrated as the bus system 94 in the drawings.

The methods disclosed by the above embodiments may be applied to the processor 91, i.e., may be implemented by the processor 91. The processor 91 may be an integrated circuit chip and may process signals. In an implementation, various steps of the above methods may be executed by the integrated logic circuit in form of hardware or instructions in form of software in the processor 91. The above processor 91 may be a general purpose processor, a Digital Signal processor (DSP), an Application Specific Integrated Circuit (ASIC), a Field Programmable Gate Array (FPGA), or other programmable logic device, discrete gate or transistor logic device, discrete hardware component. The general purpose processor may be a micro-processor or any other regular processor or the like. The steps of the methods disclosed by the embodiment of the disclosure may be executed by the hardware of a codec, or by the combination of hardware and software modules in the codec. The software modules may be installed in a well-known storage medium, such as a Random Access Memory, a flash memory, a Read Only Memory, a Programmable Read Only Memory, an electrically erasable programmable read only memory or a register. The storage medium is included in the memory 92, and the processor 91 reads information from the memory 92 to execute the steps of the above methods in cooperation with the hardware.

In an optional embodiment, the channel access parameter set according to the embodiment may include a DIFS and a CW.

In an optional embodiment, the at least one priority parameter according to the embodiment may include only the priority of each of the BSSs including the devices that contend for accessing the channel.

On the basis that the channel access parameter set includes the DIFS and the CW, in a case that the at least one priority parameter includes only the priority of each of the BSSs including the devices that contend for accessing the channel, the processor 91 is configured to determine a value and a first numerical range of the DIFS according to a ranking of the priority of the first BSS among the priorities of all the BSSs including the devices that contend for accessing the channel, and set the CW to an arbitrary value in the first numerical range, where a higher ranking of the priority of the first BSS among the priorities of all the BSSs including the devices that contend for accessing the channel corresponds to a smaller DIFS value and a smaller first numerical range; or the processor 91 is configured to assign a value to the DIFS according to the equation (1), and determine a second numerical range according to the ranking of the priority of the first BSS among the priorities of all the BSSs including the devices that contend for accessing the channel, and set the CW to an arbitrary value in the second numerical rage, where a higher ranking of the priority of the first BSS among the priorities of all the BSSs including the devices that contend for accessing the channel corresponds to a smaller second numerical range. The description of the equation (1) may be found in above embodiments and is not repeated here.

In an optional embodiment, the at least one priority parameter may further includes a priority of a service borne by each of the devices that contend for accessing the channel. That is, the at least one priority parameter includes the priority of each of the BSSs including the devices that contend for accessing the channel and the priority of the service borne by each of the devices that contend for accessing the channel, where each of the devices that contend for accessing the channel may bear one or more services.

Based on the above, particularly, the processor 91 may be configured to determine the channel access parameter set for a service borne by the first device according to the ranking of the priority of the first BSS among the priorities of all the BSSs including the devices that contend for accessing the channel in a case that the priority of the first BSS including the first device is different from a priority of the BSS including the other devices that contend for accessing the channel, where a higher ranking of the priority of the first BSS among the priorities of all the BSSs including the devices that contend for accessing the channel corresponds to a higher priority of the first device to access the channel which is indicated by the channel access parameter set; or determine the channel access parameter set for a service borne by each of the devices that contend for accessing the channel according to the priority of the service borne by the first device and priorities of services borne by the other devices that contend for accessing the channel in a case that the priority of the first BSS including the first device is the same as the priorities of the other devices that contend for accessing the channel, where a higher priority of the service borne by the first device corresponds to a higher priority of the first device to access the channel which is indicated by the channel access parameter set.

Alternatively, the processor 91 may be configured to determine the channel access parameter set for a service borne by the first device according to the ranking of the priority of the service borne by the first device among the priorities of services borne by all devices that contend for accessing the channel in a case that the priority of the service borne by the first device is different from the priorities of services borne by the other devices that contend for accessing the channel, where a higher ranking of the priority of the service borne by the first device among the priorities of services borne by all devices that contend for accessing the channel corresponds to a higher priority of the first device to access the channel which is indicated by the channel access parameter set; or determine the channel access parameter set for a service borne by the first device according to the ranking of the priority of the first BSS among the priorities of all the BSSs including the devices that contend for accessing the channel in a case that the priority of the service borne by the first device is the same as priorities of services borne by the other devices that contend for accessing the channel, where a higher ranking of the priority of the first BSS among the priorities of all the BSSs including the devices that contend for accessing the channel corresponds to a higher priority of the first device to access the channel which is indicated by the channel access parameter set.

Alternatively, the processor 91 may be configured to determine a channel access priority corresponding to a service borne by each of the devices that contend for accessing the channel according to the priority of the BSS including the device that contend for accessing the channel and a priority of the service borne by the device that contend for accessing the channel, and determine the channel access parameter set for a service borne by the first device according to a ranking of a channel access priority corresponding to the service borne by the first device among channel access priorities corresponding to services borne by all devices that contend for accessing the channel, where a higher ranking of the channel access priority corresponding to the service borne by the first device among the channel access priorities corresponding to services borne by all devices that contend for accessing the channel corresponds to a higher priority of the first device to access the channel which is indicated by the channel access parameter set.

In an alternative embodiment, the transmitter 93 may be configured to add an IE to a probe response frame, an association/reassociation response frame or a beacon frame, and transmit the channel access parameter set to the first device with the added IE to enable the first device to perform channel access based on the channel access parameter set; or the transmitter 93 may be configured to extend or reuse an existing IE of a probe response frame, an association/reassociation response frame or a beacon frame, and transmit the channel access parameter set to the first device with the extended or reused IE to enable the first device to perform channel access based on the channel access parameter set.

The device for transmitting a channel access parameter according to the embodiments of the disclosure determines the channel access parameter set for the first device according to the at least on priority parameter including the priorities of all the BSSs including the devices that contend for accessing the same channel to enable the first device to perform channel access according to the channel access parameter set, thus BSSs with different priorities may access the channel according to their priorities, the QoS requirement of the first device may be satisfied and new properties of the WLAN may be accommodated.

It should be understood by those ordinal skilled in the art, related hardware may be instructed, by using a program, to perform some or all of the steps of the embodiment of the method described above. The program may be stored in a computer readable storage medium. The program, when executed, performs the steps of the embodiment of the method described above. The storage medium includes various mediums that can store the program code, such as ROM, RAM, magnetic disk or optical disk.

Finally, it is to be noted, the above embodiments are only intended to describe the technical solutions of the disclosure, but not to limit the scope of the disclosure. Although the disclosure is described in detail with reference to the above embodiments, it should be understood by those ordinal skilled in the art that modifications can be made to the technical solutions recorded in the above embodiments or equivalent replacements can be made to some or all of the technical features thereof, which modifications and equivalent replacements will not make the corresponding technical solutions deviate from the scope of the technical solutions of the embodiments of the disclosure.

**Claims**

1. A method for transmitting a channel access parameter set, comprising:

   determining (101) the channel access parameter set to be used by a first device in a first basic service set, BSS, for accessing a channel according to at least one priority parameter, wherein the channel access parameter set is used for indicating a priority of the first device to access the channel among all devices that contend for accessing the channel, and the at least one priority parameter comprises a priority of each of BSSs comprising the devices that contend for accessing the channel; and
   transmitting (102) the channel access parameter set to the first device to enable the first device to perform channel access based on the channel access parameter set,
   wherein the channel access parameter set comprises a distributed coordination function interframe space, DIFS, and a contention window, CW.

2. The method according to claim 1, wherein the at least one priority parameter comprises only the priority of each of the BSSs comprising the devices that contend for accessing the channel; and
   determining (101) the channel access parameter set to be used by a first device in a first basic service set BSS for channel access according to at least one priority parameter comprises:

   determining a value and a first numerical range of the DIFS according to a ranking of the priority of the first BSS among the priorities of the BSSs comprising the devices that contend for accessing the channel, and setting the CW to an arbitrary value in the first numerical range, wherein a high ranking of the priority of the first BSS among the priorities of the BSSs comprising the devices that contend for accessing the channel corresponds to a small DIFS value and a small first numerical range; or
   assigning a value to the DIFS according to an equation DIFS_Value = IFSN_BSS_Priority * aSlotTime + aSIFSTime, and determining a second numerical range according to the ranking of the priority of the first BSS among the priorities of the BSSs comprising the devices that contend for accessing the channel, and setting the CW to an arbitrary value in the second numerical value, wherein a high ranking of the priority of the first BSS among the priorities of the BSSs comprising the devices that contend for accessing the channel corresponds to a small second numerical range, wherein
   DIFS_Value indicates a value of the DIFS;
   IFSN_BSS_Priority indicates an interframe coefficient corresponding to the priority of the first BSS, wherein a high priority of the first BSS corresponding to a small interframe coefficient;
   aSlotTime indicates a length of a time slot; and
   aSIFSTime indicates a length of a SIFS time.

3. The method according to claim 1, wherein the at least one priority parameter further comprises a priority of a service borne by each of the devices that contend for accessing the channel.

4. The method according to claim 3, wherein determining (101) the channel access parameter set to be used by a first device in a first basic service set BSS for accessing a channel according to at least one priority parameter comprises:

   determining the channel access parameter set for a service borne by the first device according to the ranking of the priority of the first BSS among the priorities of the BSSs comprising the devices that contend for accessing the channel in a case that the priority of the first BSS comprising the first device is different from a priority of the BSS comprising the other devices that contend for accessing the channel, wherein a high ranking of the priority of the first BSS among the priorities of the BSSs comprising the devices that contend for accessing the channel corresponds to a high priority of the first device to access the channel which is indicated by the channel access parameter set; or

determining the channel access parameter set for a service borne by each of the devices that contend for accessing the channel according to the priority of the service borne by the first device and priorities of services borne by the other devices that contend for accessing the channel in a case that the priority of the first BSS comprising the first device is the same as the priorities of the other devices that contend for accessing the channel, wherein a high priority of the service borne by the first device corresponds to a high priority of the first device to access the channel which is indicated by the channel access parameter set.

5. The method according to claim 3, wherein determining (101) the channel access parameter set to be used by a first device in a first basic service set BSS for accessing a channel according to at least one priority parameter comprises:

determining the channel access parameter set for a service borne by the first device according to the ranking of the priority of the service borne by the first device among the priorities of services borne by the devices that contend for accessing the channel in a case that the priority of the service borne by the first device is different from the priorities of services borne by the other devices that contend for accessing the channel, wherein a high ranking of the priority of the service borne by the first device among the priorities of services borne by the devices that contend for accessing the channel corresponds to a high priority of the first device to access the channel which is indicated by the channel access parameter set; or

determining the channel access parameter set for a service borne by the first device according to the ranking of the priority of the first BSS among the priorities of the BSSs comprising the devices that contend for accessing the channel in a case that the priority of the service borne by the first device is the same as priorities of services borne by the other devices that contend for accessing the channel, wherein a high ranking of the priority of the first BSS among the priorities of the BSSs comprising the devices that contend for accessing the channel corresponds to a high priority of the first device to access the channel which is indicated by the channel access parameter set.

6. The method according to claim 3, wherein determining (101) the channel access parameter set to be used by a first device in a first basic service set BSS for accessing a channel according to at least one priority parameter comprises: determining a channel access priority corresponding to a service borne by each of the devices that contend for accessing the channel according to the priority of the BSS comprising the device that contends for accessing the channel and a priority of the service borne by the device that contends for accessing the channel, and determining the channel access parameter set for a service borne by the first device according to a ranking of a channel access priority corresponding to the service borne by the first device among channel access priorities corresponding to services borne by the devices that contend for accessing the channel, wherein a high ranking of the channel access priority corresponding to the service borne by the first device among the channel access priorities corresponding to services borne by the devices that contend for accessing the channel corresponds to a high priority of the first device to access the channel which is indicated by the channel access parameter set.

7. The method according to any one of claims 1 to 6, wherein transmitting (102) the channel access parameter set to the first device to enable the first device to perform channel access based on the channel access parameter set comprises:

adding an information element, IE, to a probe response frame, an association/reassociation response frame or a beacon frame, and transmitting the channel access parameter set to the first device with the added IE to enable the first device to perform channel access based on the channel access parameter set; or

extending or reusing an existing IE of a probe response frame, an association/reassociation response frame or a beacon frame, and transmitting the channel access parameter set to the first device with the extended or reused IE to enable the first device to perform channel access based on the channel access parameter set.

8. A device for transmitting a channel access parameter set, comprising:

a determination module (81) configured to determine the channel access parameter set to be used by a first device in a first basic service set, BSS, for accessing a channel according to at least one priority parameter, wherein the channel access parameter set is used for indicating a priority of the first device to access the channel among all devices that contend for accessing the channel, and the at least one priority parameter comprises a priority of each of BSSs comprising the devices that contend for accessing the channel; and

a transmission module (82) configured to transmit the channel access parameter set determined by the determination module to the first device to enable the first device to perform channel access based on the channel access parameter set,

wherein the channel access parameter set comprises a distributed coordination function interframe space, DIFS, and a contention window, CW.

**9.** The device according to claim 8, wherein the at least one priority parameter comprises only the priority of each of the BSSs comprising the devices that contend for accessing the channel; and

the determination module (81) is configured to determine a value and a first numerical range of the DIFS according to a ranking of the priority of the first BSS among the priorities of the BSSs comprising the devices that contend for accessing the channel, and set the CW to an arbitrary value in the first numerical range, wherein a high ranking of the priority of the first BSS among the priorities of the BSSs comprising the devices that contend for accessing the channel corresponds to a small DIFS value and a small first numerical range; or

the determination module (81) is configured to assign a value to the DIFS according to an equation $DIFS\_Value = IFSN\_BSS\_Priority * aSlotTime + aSIFSTime$, and determine a second numerical range according to the ranking of the priority of the first BSS among the priorities of the BSSs comprising the devices that contend for accessing the channel, and set the CW to an arbitrary value in the second numerical value, wherein a high ranking of the priority of the first BSS among the priorities of the BSSs comprising the devices that contend for accessing the channel corresponds to a small second numerical range, wherein

$DIFS\_Value$ indicates a value of the DIFS;

$IFSN\_BSS\_Priority$ indicates an interframe coefficient corresponding to the priority of the first BSS, wherein a high priority of the first BSS corresponding to a small interframe coefficient;

$aSlotTime$ indicates a length of a time slot; and

$aSIFSTime$ indicates a length of a SIFS time.

**10.** The device according to claim 8, wherein the at least one priority parameter further comprises a priority of a services borne by each of the devices that contend for accessing the channel.

**11.** The device according to claim 10, wherein the determination module (81) is configured to determine the channel access parameter set for a service borne by the first device according to the ranking of the priority of the first BSS among the priorities of the BSSs comprising the devices that contend for accessing the channel in a case that the priority of the first BSS comprising the first device is different from a priority of the BSS comprising the other devices that contend for accessing the channel, wherein a high ranking of the priority of the first BSS among the priorities of the BSSs comprising the devices that contend for accessing the channel corresponds to a high priority of the first device to access the channel which is indicated by the channel access parameter set; or determine the channel access parameter set for a service borne by each of the devices that contend for accessing the channel according to the priority of the service borne by the first device and priorities of services borne by the other devices that contend for accessing the channel in a case that the priority of the first BSS comprising the first device is the same as the priorities of the other devices that contend for accessing the channel, wherein a high priority of the service borne by the first device corresponds to a high priority of the first device to access the channel which is indicated by the channel access parameter set.

**12.** The device according to claim 10, wherein the determination module (81) is configured to determine the channel access parameter set for a service borne by the first device according to the ranking of the priority of the service borne by the first device among the priorities of services borne by the devices that contend for accessing the channel in a case that the priority of the service borne by the first device is different from the priorities of services borne by the other devices that contend for accessing the channel, wherein a high ranking of the priority of the service borne by the first device among the priorities of services borne by the devices that contend for accessing the channel corresponds to a high priority of the first device to access the channel which is indicated by the channel access parameter set; or determine the channel access parameter set for a service borne by the first device according to the ranking of the priority of the first BSS among the priorities of the BSSs comprising the devices that contend for accessing the channel in a case that the priority of the service borne by the first device is the same as priorities of services borne by the other devices that contend for accessing the channel, wherein a high ranking of the priority of the first BSS among the priorities of all the BSSs comprising the devices that contend for accessing the channel corresponds to a high priority of the first device to access the channel which is indicated by the channel access parameter set.

**13.** The device according to claim 10, wherein the determination module (81) is configured to determine a channel access priority corresponding to a service borne by each of the devices that contend for accessing the channel according to the priority of the BSS comprising the device that contends for accessing the channel and a priority of the service borne by the device that contends for accessing the channel, and determine the channel access parameter set for a service borne by the first device according to a ranking of a channel access priority corresponding to the service borne by the first device among channel access priorities corresponding to services borne by the devices that contend for accessing the channel, wherein a high ranking of the channel access priority corresponding to the service borne by the first device among the channel access priorities corresponding to services borne by the devices that contend for accessing the channel corresponds to a high priority of the first device to access the channel which is indicated by the channel access parameter set.

**Patentansprüche**

1. Verfahren zum Übertragen eines Kanalzugangsparametersatzes, umfassend:

   Bestimmen (101) des Kanalzugangsparametersatzes, der durch eine erste Vorrichtung in einem ersten Basisdienstsatz, BSS, zum Zugang zu einem Kanal gemäß mindestens einem Prioritätsparameter zu verwenden ist, wobei der Kanalzugangsparametersatz zum Angeben einer Priorität der ersten Vorrichtung zum Zugang zu dem Kanal unter allen um den Zugang zu dem Kanal konkurrierenden Vorrichtungen verwendet wird und der mindestens eine Prioritätsparameter eine Priorität jedes der BSS umfasst, die die um den Zugang zu dem Kanal konkurrierenden Vorrichtungen umfasst; und
   Übertragen (102) des Kanalzugangsparametersatzes an die erste Vorrichtung, um der ersten Vorrichtung zu ermöglichen, einen Kanalzugang basierend auf dem Kanalzugangsparametersatz durchzuführen, wobei der Kanalzugangsparametersatz ein verteilter Koordinierungsfunktion-Interframe-Space, DIFS, und ein Konkurrenzfenster, CW, umfasst.

2. Verfahren nach Anspruch 1, wobei der mindestens eine Prioritätsparameter nur die Priorität jedes der BSS umfasst, die die um den Zugang zu dem Kanal konkurrierenden Vorrichtungen umfassen; und
   Bestimmen (101) des Kanalzugangsparametersatzes, der durch eine erste Vorrichtung in einem ersten Basisdienstsatz BSS für den Kanalzugang gemäß mindestens einem Prioritätsparameter zu verwenden ist, umfasst:

   Bestimmen eines Wertes und eines ersten numerischen Bereichs des DIFS gemäß einer Rangfolge der Priorität des ersten BSS unter den Prioritäten der BSS, die die um den Zugang zu dem Kanal konkurrierenden Vorrichtungen umfassen, und Einstellen des CW auf einen beliebigen Wert im ersten numerischen Bereich, wobei eine hohe Rangfolge der Priorität des ersten BSS unter den Prioritäten der BSS, die die um den Zugang zu dem Kanal konkurrierenden Vorrichtungen umfassen, einem kleinen DIFS-Wert und einem kleinen ersten numerischen Bereich entspricht; oder Zuweisen eines Wertes zu dem DIFS gemäß einer Gleichung DIFS_Wert = IFSN_BSS_Priorität * aSlotZeit + aSIFSZeit und Bestimmen eines zweiten numerischen Bereichs gemäß der Rangfolge der Priorität des ersten BSS unter den Prioritäten der BSS, die die um den Zugang zu dem Kanal konkurrierenden Vorrichtungen umfassen, und Einstellen des CW auf einen beliebigen Wert im zweiten Zahlenwert, wobei eine hohe Rangfolge der Priorität des ersten BSS unter den Prioritäten der BSS, die die um den Zugang zu dem Kanal konkurrierenden Vorrichtungen umfassen, einem kleinen zweiten Zahlenbereich entspricht, wobei DIFS_Wert einen Wert des DIFS angibt;
   IFSN_BSS_Priorität einen Interframe-Koeffizienten angibt, der der Priorität des ersten BSS entspricht, wobei eine hohe Priorität des ersten BSS einem kleinen Interframe-Koeffizienten entspricht;
   aSlotZeit die Länge eines Zeitfensters angibt; und
   aSIFSZeit die Länge einer SIFS-Zeit angibt.

3. Verfahren nach Anspruch 1, wobei der mindestens eine Prioritätsparameter ferner eine Priorität eines Dienstes umfasst, die durch jede der um den Zugang zu dem Kanal konkurrierenden Vorrichtungen erbracht wird.

4. Verfahren nach Anspruch 3, wobei das Bestimmen (101) des Kanalzugangsparametersatzes, der durch eine erste Vorrichtung in einem ersten Basisdienstsatz BSS zum Zugang zu einem Kanal gemäß mindestens einem Prioritätsparameter zu verwenden ist, umfasst:

   Bestimmen des Kanalzugangsparametersatzes für einen Dienst, der durch die erste Vorrichtung erbracht wird, gemäß der Rangfolge der Priorität des ersten BSS unter den Prioritäten der BSS, die die um den Zugang zu dem Kanal konkurrierenden Vorrichtungen umfassen, falls die Priorität des ersten BSS, das die erste Vorrichtung umfasst, sich von einer Priorität des BSS unterscheidet, das die anderen um den Zugang zu dem Kanal konkurrierenden Vorrichtungen umfasst, wobei eine hohe Rangfolge der Priorität des ersten BSS unter den Prioritäten der BSS, die die um den Zugang zu dem Kanal konkurrierenden Vorrichtungen umfassen, einer hohen Priorität der ersten Vorrichtung für den Zugang zu dem Kanal entspricht, der durch den Kanalzugangsparametersatz angegeben wird; oder

Bestimmen des Kanalzugangsparametersatzes für einen Dienst, der durch jede der um den Zugang zu dem Kanal konkurrierenden Vorrichtungen erbracht wird, gemäß der Priorität des Dienstes, der durch die erste Vorrichtung erbracht wird, und der Prioritäten der Dienste, die durch die anderen um den Zugang zu dem Kanal konkurrierenden Vorrichtungen erbracht werden, falls die Priorität der ersten BSS, die die erste Vorrichtung umfasst, die gleiche wie die Prioritäten der anderen um den Zugang zu dem Kanal konkurrierenden Vorrichtungen ist, wobei eine hohe Priorität des durch die erste Vorrichtung erbrachten Dienstes einer hohen Priorität der ersten Vorrichtung für den Zugang zu dem Kanal entspricht, der durch den Kanalzugangsparametersatz angegeben wird.

5. Verfahren nach Anspruch 3, wobei das Bestimmen (101) des Kanalzugangsparametersatzes, der durch eine erste Vorrichtung in einem ersten Basisdienstsatz BSS zum Zugang zu einem Kanal gemäß mindestens einem Prioritätsparameter zu verwenden ist, umfasst:

Bestimmen des Kanalzugangsparametersatzes für einen Dienst, der durch die erste Vorrichtung erbracht wird, gemäß der Rangfolge der Priorität des Dienstes, der durch die erste Vorrichtung erbracht wird, unter den Prioritäten von Diensten, die durch die um den Zugang zu dem Kanal konkurrierenden Vorrichtungen erbracht werden, falls die Priorität des Dienstes, der durch die erste Vorrichtung erbracht wird, sich von den Prioritäten der Dienste unterscheidet, die durch die anderen um den Zugang zu dem Kanal konkurrierenden Vorrichtungen erbracht werden, wobei eine hohe Rangfolge der Priorität des Dienstes, der durch die erste Vorrichtung erbracht wird, unter den Prioritäten von Diensten, die durch die um den Zugang zu dem Kanal konkurrierenden Vorrichtungen erbracht werden, einer hohen Priorität der ersten Vorrichtung für den Zugriff auf den Kanal entspricht, der durch den Kanalzugangsparametersatz angegeben wird; oder

Bestimmen des Kanalzugangsparametersatzes für einen Dienst, der durch die erste Vorrichtung erbracht wird, gemäß der Rangfolge der Priorität des ersten BSS unter den Prioritäten der BSS, die die um den Zugang zu dem Kanal konkurrierenden Vorrichtungen umfassen, falls die Priorität des Dienstes, der durch die erste Vorrichtung erbracht wird, die gleiche wie die Prioritäten der Dienste ist, die durch die anderen um den Zugang zu dem Kanal konkurrieren Vorrichtungen erbracht werden, wobei eine hohe Rangfolge der Priorität des ersten BSS unter den Prioritäten der BSS, die die um den Zugang zu dem Kanal konkurrierenden Vorrichtungen umfassen, einer hohen Priorität der ersten Vorrichtung für den Zugang zu dem Kanal entspricht, der durch den Kanalzugangsparametersatz angegeben wird.

6. Verfahren nach Anspruch 3, wobei das Bestimmen (101) des Kanalzugangsparametersatzes, der durch eine erste Vorrichtung in einem ersten Basisdienstsatz BSS zum Zugang zu einem Kanal gemäß mindestens einem Prioritätsparameter zu verwenden ist, umfasst:
Bestimmen einer Kanalzugangspriorität, die einem Dienst, der durch jede der um den Zugang zu dem Kanal konkurrierenden Vorrichtungen erbracht wird, gemäß der Priorität des BSS, der die um den Zugang zu dem Kanal konkurrierende Vorrichtung umfasst, und einer Priorität des Dienstes entspricht, der durch die um den Zugang zu dem Kanal konkurrierende Vorrichtung erbracht wird, und Bestimmen des Kanalzugangsparametersatzes für einen Dienst, der durch die erste Vorrichtung erbracht wird, gemäß einer Rangfolge einer Kanalzugangspriorität, die dem Dienst entspricht, der durch die erste Vorrichtung erbracht wird, unter den Kanalzugangsprioritäten, die den Diensten entsprechen, die durch die um den Zugang zu dem Kanal konkurrierenden Vorrichtungen erbracht werden, wobei eine hohe Rangfolge der Kanalzugangspriorität, die dem durch die erste Vorrichtung erbrachten Dienst entspricht, unter den Kanalzugangsprioritäten, die den durch die um den Zugang zu dem Kanal konkurrierenden Vorrichtungen erbrachten Diensten entsprechen, einer hohen Priorität der ersten Vorrichtung für den Zugang zu dem Kanal entspricht, der durch den Kanalzugangsparametersatz angegeben wird.

7. Verfahren nach einem der Ansprüche 1 bis 6, wobei das Übertragen (102) des Kanalzugangsparametersatzes an die erste Vorrichtung, um der ersten Vorrichtung zu ermöglichen, den Kanalzugang basierend auf dem Kanalzugangsparametersatz durchzuführen, umfasst:

Hinzufügen eines Informationselements, IE, zu einem Test-Antwort-Frame, einem Assoziations-/Reassoziations-Antwort-Frame oder einem Beacon-Frame und Übertragen des Kanalzugangsparametersatzes an die erste Vorrichtung mit dem hinzugefügten IE, um der ersten Vorrichtung zu ermöglichen, den Kanalzugang basierend auf dem Kanalzugangsparametersatz durchzuführen; oder

Erweitern oder Wiederverwenden eines vorhandenen IE eines Test-Antwort-Frames, eines Assoziations-/Reassoziations-Antwort-Frames oder eines Beacon-Frames und Übertragen des Kanalzugangsparametersatzes an die erste Vorrichtung mit dem erweiterten oder wiederverwendeten IE, um der ersten Vorrichtung zu ermöglichen, den Kanalzugang basierend auf dem Kanalzugangsparametersatz durchzuführen.

8. Vorrichtung zum Übertragen eines Kanalzugangsparametersatzes, umfassend:

ein Bestimmungsmodul (81), das dazu eingerichtet ist, den Kanalzugangsparametersatz, der durch eine erste Vorrichtung in einem ersten Basisdienstsatz, BSS, zum Zugang zu einem Kanal gemäß mindestens einem Prioritätsparameter zu verwenden ist, zu bestimmen, wobei der Kanalzugangsparametersatz zum Angeben einer Priorität der ersten Vorrichtung zum Zugang zu dem Kanal unter allen um den Zugang zu dem Kanal konkurrierenden Vorrichtungen verwendet wird und der mindestens eine Prioritätsparameter eine Priorität jedes der BSS umfasst, die die um den Zugang zu dem Kanal konkurrierenden Vorrichtungen umfassen; und
ein Übertragungsmodul (82), das dazu eingerichtet ist, den durch das Bestimmungsmodul bestimmten Kanalzugangsparametersatz an die erste Vorrichtung zu übertragen, um der ersten Vorrichtung zu ermöglichen, den Kanalzugang basierend auf dem Kanalzugangsparametersatz durchzuführen,
wobei der Kanalzugangsparametersatz ein verteilter Koordinierungsfunktion-Interframe-Space, DIFS, und ein Konkurrenzfenster, CW, umfasst.

9. Vorrichtung nach Anspruch 8, wobei der mindestens eine Prioritätsparameter nur die Priorität jedes der BSS umfasst, die die um den Zugang zu dem Kanal konkurrierenden Vorrichtungen umfassen; und
das Bestimmungsmodul (81) dazu eingerichtet ist, einen Wert und einen ersten numerischen Bereich des DIFS gemäß einer Rangfolge der Priorität des ersten BSS unter den Prioritäten der BSS, die die um den Zugang zu dem Kanal konkurrierenden Vorrichtungen umfassen, zu bestimmen und das CW auf einen beliebigen Wert im ersten numerischen Bereich einzustellen, wobei eine hohe Rangfolge der Priorität des ersten BSS unter den Prioritäten der BSS, die die um den Zugang zu dem Kanal konkurrierenden Vorrichtungen umfassen, einem kleinen DIFS-Wert und einem kleinen ersten numerischen Bereich entspricht; oder
das Bestimmungsmodul (81) dazu eingerichtet ist, dem DIFS einen Wert gemäß einer Gleichung DIFS_Wert = IFSN_BSS_Priorität * aSlotZeit + aSIFSZeit zuzuweisen und einen zweiten numerischen Bereich gemäß der Rangfolge der Priorität des ersten BSS unter den Prioritäten der BSS, die die um den Zugang zu dem Kanal konkurrierenden Vorrichtungen umfassen, zu bestimmen und das CW auf einen beliebigen Wert im zweiten Zahlenwert einzustellen, wobei eine hohe Rangfolge der Priorität des ersten BSS unter den Prioritäten der BSS, die die um den Zugang zu dem Kanal konkurrierenden Vorrichtungen umfassen, einem kleinen zweiten Zahlenbereich entspricht, wobei
DIFS_Wert einen Wert des DIFS angibt;
IFSN_BSS_Priorität einen Interframe-Koeffizienten angibt, der der Priorität des ersten BSS entspricht, wobei eine hohe Priorität des ersten BSS einem kleinen Interframe-Koeffizienten entspricht;
aSlotZeit die Länge eines Zeitfensters angibt; und
aSIFSZeit die Länge einer SIFS-Zeit angibt.

10. Vorrichtung nach Anspruch 8, wobei der mindestens eine Prioritätsparameter ferner eine Priorität eines Dienstes umfasst, die durch jede der um den Zugang zu dem Kanal konkurrierenden Vorrichtungen erbracht wird.

11. Vorrichtung nach Anspruch 10, wobei das Bestimmungsmodul (81) dazu eingerichtet ist, den Kanalzugangsparametersatz für einen Dienst, der durch die erste Vorrichtung erbracht wird, gemäß der Rangfolge der Priorität des ersten BSS unter den Prioritäten der BSS zu bestimmen, die die um den Zugang zu dem Kanal konkurrierenden Vorrichtungen umfassen, falls die Priorität des ersten BSS, der die erste Vorrichtung umfasst, sich von einer Priorität des BSS unterscheidet, das die anderen um den Zugang zu dem Kanal konkurrierenden Vorrichtungen umfasst, wobei eine hohe Rangfolge der Priorität des ersten BSS unter den Prioritäten der BSS, die die um den Zugang zu dem Kanal konkurrierenden Vorrichtungen umfassen, einer hohen Priorität der ersten Vorrichtung für den Zugang zu dem Kanal entspricht, der durch den Kanalzugangsparametersatz angegeben wird; oder den Kanalzugangsparametersatz für einen Dienst, der durch jede der um den Zugang zu dem Kanal konkurrierenden Vorrichtungen erbracht wird, gemäß der Priorität des Dienstes, der durch die erste Vorrichtung erbracht wird, und den Prioritäten der Dienste, die durch die anderen um den Zugang zu dem Kanal konkurrierenden Vorrichtungen erbracht werden, zu bestimmen , falls die Priorität des ersten BSS, der die erste Vorrichtung umfasst, die gleiche wie die Prioritäten der anderen um den Zugang zu dem Kanal konkurrierenden Vorrichtungen ist, wobei eine hohe Priorität des Dienstes, der durch die erste Vorrichtung erbracht wird, einer hohen Priorität der ersten Vorrichtung für den Zugang zu dem Kanal entspricht, der durch den Kanalzugangsparametersatz angegeben wird.

**12.** Vorrichtung nach Anspruch 10, wobei das Bestimmungsmodul (81) dazu eingerichtet ist, den Kanalzugangsparametersatz für einen Dienst, der durch die erste Vorrichtung erbracht wird, gemäß der Rangfolge der Priorität des Dienstes, der durch die erste Vorrichtung erbracht wird, unter den Prioritäten von Diensten zu bestimmen, die durch die um den Zugang zu dem Kanal konkurrierenden Vorrichtungen erbracht werden, falls die Priorität des Dienstes, der durch die erste Vorrichtung erbracht wird, sich von den Prioritäten von Diensten unterscheidet, die durch die anderen um den Zugang zu dem Kanal konkurrierenden Vorrichtungen erbracht werden, wobei eine hohe Rangfolge der Priorität des Dienstes, der von der ersten Vorrichtung erbracht wird, unter den Prioritäten von Diensten, die durch die um den Zugang zu dem Kanal konkurrierenden Vorrichtungen erbracht werden, einer hohen Priorität der ersten Vorrichtung für den Zugang zu dem Kanal entspricht, der durch den Kanalzugangsparametersatz angegeben wird; oder den Kanalzugangsparametersatz für einen Dienst, der durch die erste Vorrichtung erbracht wird, gemäß der Rangfolge der Priorität des ersten BSS unter den Prioritäten der BSS zu bestimmen, die die um den Zugang zu dem Kanal konkurrierenden Vorrichtungen umfassen, falls die Priorität des Dienstes, der durch die erste Vorrichtung erbracht wird, die gleiche wie die Prioritäten von Diensten ist, die durch die anderen um den Zugang zu dem Kanal konkurrierenden Vorrichtungen erbracht werden, wobei eine hohe Rangfolge der Priorität des ersten BSS unter den Prioritäten aller BSS, die die um den Zugang zu dem Kanal konkurrierenden Vorrichtungen umfassen, einer hohen Priorität der ersten Vorrichtung für den Zugang zu dem Kanal entspricht, der durch den Kanalzugangsparametersatz angegeben wird.

**13.** Vorrichtung nach Anspruch 10, wobei das Bestimmungsmodul (81) dazu eingerichtet ist, eine Kanalzugangspriorität, die einem Dienst entspricht, der durch jede der um den Zugang zu dem Kanal konkurrierenden Vorrichtungen erbracht wird, gemäß der Priorität des BSS, das die um den Zugang zu dem Kanal konkurrierende Vorrichtung umfasst, und einer Priorität des Dienstes, der durch die um den Zugang zu dem Kanal konkurrierende Vorrichtung erbracht wird, zu bestimmen und den Kanalzugangsparametersatz für einen Dienst, der durch die erste Vorrichtung erbracht wird, gemäß einer Rangfolge einer Kanalzugangspriorität, die dem Dienst entspricht, der durch die erste Vorrichtung erbracht wird, unter den Kanalzugangsprioritäten, die den Diensten entsprechen, die durch die um den Zugang zu dem Kanal konkurrierenden Vorrichtungen erbracht werden, zu bestimmen, wobei eine hohe Rangfolge der Kanalzugriffspriorität, die dem durch die erste Vorrichtung erbrachten Dienst entspricht, unter den Kanalzugangsprioritäten, die den durch die um den Zugang zu dem Kanal konkurrierenden Vorrichtungen erbrachten Diensten entsprechen, einer hohen Priorität der ersten Vorrichtung für den Zugang zu dem Kanal entspricht, der durch den Kanalzugangsparametersatz angegeben wird.

**Revendications**

**1.** Procédé de transmission d'un ensemble de paramètres d'accès à la voie, comprenant :

la détermination (101) de l'ensemble de paramètres d'accès à la voie devant être utilisé par un premier dispositif dans un premier ensemble de services de base, BSS, pour accéder à une voie en fonction d'au moins un paramètre de priorité, l'ensemble de paramètres d'accès à la voie étant utilisé pour indiquer une priorité du premier dispositif pour accéder à la voie parmi tous les dispositifs qui se disputent l'accès à la voie, et l'au moins un paramètre de priorité comprenant une priorité de chacun de BSS comprenant les dispositifs qui se disputent l'accès à la voie ; et
la transmission (102) de l'ensemble de paramètres d'accès à la voie au premier dispositif pour permettre au premier dispositif d'effectuer un accès à la voie sur la base de l'ensemble de paramètres d'accès à la voie, dans lequel l'ensemble de paramètres d'accès à la voie comprend un espace intertrame à fonction de coordination distribuée, DIFS, et une fenêtre de contention, CW.

**2.** Procédé selon la revendication 1, dans lequel l'au moins un paramètre de priorité comprend uniquement la priorité de chacun des BSS comprenant les dispositifs qui se disputent l'accès à la voie ; et
la détermination (101) de l'ensemble de paramètres d'accès à la voie devant être utilisé par un premier dispositif dans un premier ensemble de services de base BSS pour accéder à une voie en fonction d'au moins un paramètre de priorité comprend :

la détermination d'une valeur et d'une première gamme numérique du DIFS en fonction d'un rang de la priorité du premier BSS parmi les priorités des BSS comprenant les dispositifs qui se disputent l'accès à la voie, et le réglage de la CW sur une valeur arbitraire dans la première gamme numérique, un rang élevé de la priorité du premier BSS parmi les priorités des BSS comprenant les dispositifs qui se disputent l'accès à la voie correspondant à une petite valeur de DIFS et une petite première gamme numérique ; ou

l'attribution d'une valeur au DIFS en fonction d'une équation DIFS_Value = IFSN_BSS_Priority * aSlotTime + aSIFSTime, et la détermination d'une deuxième gamme numérique en fonction du rang de la priorité du premier BSS parmi les priorités des BSS comprenant les dispositifs qui se disputent l'accès à la voie, et le réglage de la CW sur une valeur arbitraire dans la deuxième gamme numérique, un rang élevé de la priorité du premier BSS parmi les priorités des BSS comprenant les dispositifs qui se disputent l'accès à la voie correspondant à une petite deuxième gamme numérique, dans lequel
DIFS_Value indique une valeur du DIFS ;
IFSN_BSS_Priority indique un coefficient intertrame correspondant à la priorité du premier BSS, une priorité élevée du premier BSS correspondant à un petit coefficient intertrame ;
aSlotTime indique une longueur d'un intervalle de temps ; et
aSIFSTime indique une longueur une longueur d'un temps SIFS.

3. Procédé selon la revendication 1, dans lequel l'au moins un paramètre de priorité comprend en outre une priorité d'un service porté par chacun des dispositifs qui se disputent l'accès à la voie.

4. Procédé selon la revendication 3, dans lequel la détermination (101) de l'ensemble de paramètres d'accès à la voie devant être utilisé par un premier dispositif dans un premier ensemble de services de base BSS pour accéder à une voie en fonction d'au moins un paramètre de priorité comprend :

la détermination de l'ensemble de paramètres d'accès à la voie pour un service porté par le premier dispositif en fonction du rang de la priorité du premier BSS parmi les priorités des BSS comprenant les dispositifs qui se disputent l'accès à la voie dans un cas dans lequel la priorité du premier BSS comprenant le premier dispositif est différente d'une priorité des BSS comprenant les autres dispositifs qui se disputent l'accès à la voie, un rang élevé de la priorité du premier BSS parmi les priorités des BSS comprenant les dispositifs qui se disputent l'accès à la voie correspondant à une priorité élevée du premier dispositif pour accéder à la voie qui est indiquée par l'ensemble de paramètres d'accès à la voie ; ou
la détermination de l'ensemble de paramètres d'accès à la voie pour un service porté par chacun des dispositifs qui se disputent l'accès à la voie en fonction de la priorité du service porté par le premier dispositif et de priorités de services portés par les autres dispositifs qui se disputent l'accès à la voie dans un cas dans lequel la priorité du premier BSS comprenant le premier dispositif est la même que les priorités des autres dispositifs qui se disputent l'accès à la voie, une priorité élevée du service porté par le premier dispositif correspondant à une priorité élevée du premier dispositif pour accéder à la voie qui est indiquée par l'ensemble de paramètres d'accès à la voie.

5. Procédé selon la revendication 3, dans lequel la détermination (101) de l'ensemble de paramètres d'accès à la voie devant être utilisé par un premier dispositif dans un premier ensemble de services de base BSS pour accéder à une voie en fonction d'au moins un paramètre de priorité comprend :

la détermination de l'ensemble de paramètres d'accès à la voie pour un service porté par le premier dispositif en fonction du rang de la priorité du service porté par le premier dispositif parmi les priorités de services portés par les dispositifs qui se disputent l'accès à la voie dans un cas dans lequel la priorité du service porté par le premier dispositif est différente des priorités de services portés par les autres dispositifs qui se disputent l'accès à la voie, un rang élevé de la priorité du service porté par le premier dispositif parmi les priorités de services portés par les dispositifs qui se disputent l'accès à la voie correspondant à une priorité élevée du premier dispositif pour accéder à la voie qui est indiquée par l'ensemble de paramètres d'accès à la voie ; ou
la détermination de l'ensemble de paramètres d'accès à la voie pour un service porté par le premier dispositif en fonction du rang de la priorité du premier BSS parmi les priorités des BSS comprenant les dispositifs qui se disputent l'accès à la voie dans un cas dans lequel la priorité du service porté par le premier dispositif est la même que des propriétés de services portés par les autres dispositifs qui se disputent l'accès à la voie, un rang élevé de la priorité du premier BSS parmi les priorités des BSS comprenant les dispositifs qui se disputent l'accès à la voie correspondant à une priorité élevée du premier dispositif pour accéder à la voie qui est indiquée par l'ensemble de paramètres d'accès à la voie.

6. Procédé selon la revendication 3, dans lequel la détermination (101) de l'ensemble de paramètres d'accès à la voie devant être utilisé par un premier dispositif dans un premier ensemble de services de base BSS pour accéder à une voie en fonction d'au moins un paramètre de priorité comprend :
la détermination d'une priorité d'accès à la voie correspondant à un service porté par chacun des dispositifs qui se disputent l'accès à la voie en fonction de la priorité du BSS comprenant le dispositif qui dispute l'accès à la voie et d'une priorité du service porté par le dispositif qui dispute l'accès à la voie, et la détermination de l'ensemble de paramètres d'accès à la voie pour un service porté par le premier dispositif en fonction d'un rang d'une priorité d'accès à la voie correspondant au service porté par le premier dispositif parmi des priorités d'accès à la voie correspondant à des services portés par les dispositifs qui se disputent l'accès à la voie, un rang élevé de la priorité d'accès à la voie correspondant au service porté par le premier dispositif parmi les priorités d'accès à la voie correspondant à des services portés par les dispositifs qui se disputent l'accès à la voie correspondant à une priorité élevée du premier dispositif pour accéder à la voie qui est indiquée par l'ensemble de paramètres d'accès à la voie.

7. Procédé selon l'une quelconque des revendications 1 à 6, dans lequel la transmission (102) de l'ensemble de paramètres d'accès à la voie au premier dispositif pour permettre au premier dispositif d'effectuer un accès à la voie sur la base de l'ensemble de paramètres d'accès à la voie comprend :

l'ajout d'un élément d'information, IE, à une trame de réponse de vérification, une trame de réponse d'association/réassociation ou une trame balise, et la transmission de l'ensemble de paramètres d'accès à la voie au premier dispositif avec l'IE ajouté pour permettre au premier dispositif d'effectuer un accès à la voie sur la base de l'ensemble de paramètres d'accès à la voie ; ou
l'extension ou la réutilisation d'un IE existant d'une trame de réponse de vérification, d'une trame de réponse d'association/réassociation ou d'une trame balise, et la transmission de l'ensemble de paramètres d'accès à la voie au premier dispositif avec l'IE étendu ou réutilisé pour permettre au premier dispositif d'effectuer un accès à la voie sur la base de l'ensemble de paramètres d'accès à la voie.

8. Dispositif destiné à transmettre un ensemble de paramètres d'accès à la voie, comprenant :

un module de détermination (81) configuré pour déterminer l'ensemble de paramètres d'accès à la voie devant être utilisé par un premier dispositif dans un premier ensemble de services de base, BSS, pour accéder à une voie en fonction d'au moins un paramètre de priorité, l'ensemble de paramètres d'accès à la voie étant utilisé pour indiquer une priorité du premier dispositif pour accéder à la voie parmi tous les dispositifs qui se disputent l'accès à la voie, et l'au moins un paramètre de priorité comprenant une priorité de chacun de BSS comprenant les dispositifs qui se disputent l'accès à la voie ; et
un module de transmission (82) configuré pour transmettre l'ensemble de paramètres d'accès à la voie déterminé par le module de détermination au premier dispositif pour permettre au premier dispositif d'effectuer un accès à la voie sur la base de l'ensemble de paramètres d'accès à la voie,
dans lequel l'ensemble de paramètres d'accès à la voie comprend un espace intertrame à fonction de coordination distribuée, DIFS, et une fenêtre de contention, CW.

9. Dispositif selon la revendication 8, dans lequel l'au moins un paramètre de priorité comprend uniquement la priorité de chacun des BSS comprenant les dispositifs qui se disputent l'accès à la voie ; et
le module de détermination (81) est configuré pour déterminer une valeur et une première gamme numérique du DIFS en fonction d'un rang de la priorité du premier BSS parmi les priorités des BSS comprenant les dispositifs qui se disputent l'accès à la voie, et le réglage de la CW sur une valeur arbitraire dans la première gamme numérique, un rang élevé de la priorité du premier BSS parmi les priorités des BSS comprenant les dispositifs qui se disputent l'accès à la voie correspondant à une petite valeur de DIFS et une petite première gamme numérique ; ou
le module de détermination (81) est configuré pour attribuer une valeur au DIFS en fonction d'une équation $DIFS\_Value = IFSN\_BSS\_Priority * aSlotTime + aSIFSTime$, et déterminer une deuxième gamme numérique en fonction du rang de la priorité du premier BSS parmi les priorités des BSS comprenant les dispositifs qui se disputent l'accès à la voie, et régler la CW sur une valeur arbitraire dans la deuxième gamme numérique, un rang élevé de la priorité du premier BSS parmi les priorités des BSS comprenant les dispositifs qui se disputent l'accès à la voie correspondant à une petite deuxième gamme numérique, dans lequel
$DIFS\_Value$ indique une valeur du DIFS ;
$IFSN\_BSS\_Priority$ indique un coefficient intertrame correspondant à la priorité du premier BSS, une priorité élevée du premier BSS correspondant à un petit coefficient intertrame ;
$aSlotTime$ indique une longueur d'un intervalle de temps ; et
$aSIFSTime$ indique une longueur une longueur d'un temps SIFS.

10. Dispositif selon la revendication 8, dans lequel l'au moins un paramètre de priorité comprend en outre une priorité d'un service porté par chacun des dispositifs qui se disputent l'accès à la voie.

11. Dispositif selon la revendication 10, dans lequel le module de détermination (81) est configuré pour déterminer l'ensemble de paramètres d'accès à la voie pour un service porté par le premier dispositif en fonction du rang de la priorité du premier BSS parmi les priorités des BSS comprenant les dispositifs qui se disputent l'accès à la voie dans un cas dans lequel la priorité du premier BSS comprenant le premier dispositif est différente d'une priorité des BSS comprenant les autres dispositifs qui se disputent l'accès à la voie, un rang élevé de la priorité du premier BSS parmi les priorités des BSS comprenant les dispositifs qui se disputent l'accès à la voie correspondant à une priorité élevée du premier dispositif pour accéder à la voie qui est indiquée par l'ensemble de paramètres d'accès à la voie ; ou déterminer l'ensemble de paramètres d'accès à la voie pour un service porté par chacun des dispositifs qui se disputent l'accès à la voie en fonction de la priorité du service porté par le premier dispositif et de priorités de services portés par les autres dispositifs qui se disputent l'accès à la voie dans un cas dans lequel la priorité du premier BSS comprenant le premier dispositif est la même que les priorités des autres dispositifs qui se disputent l'accès à la voie, une priorité élevée du service porté par le premier dispositif correspondant à une priorité élevée du premier dispositif pour accéder à la voie qui est indiquée par l'ensemble de paramètres d'accès à la voie.

12. Dispositif selon la revendication 10, dans lequel le module de détermination (81) est configuré pour déterminer l'ensemble de paramètres d'accès à la voie pour un service porté par le premier dispositif en fonction du rang de la priorité du service porté par le premier dispositif parmi les priorités de services portés par les dispositifs qui se disputent l'accès à la voie dans un cas dans lequel la priorité du service porté par le premier dispositif est différente des priorités de services portés par les autres dispositifs qui se disputent l'accès à la voie, un rang élevé de la priorité du service porté par le premier dispositif parmi les priorités de services portés par les dispositifs qui se disputent l'accès à la voie correspondant à une priorité élevée du premier dispositif pour accéder à la voie qui est indiquée par l'ensemble de paramètres d'accès à la voie ; ou déterminer l'ensemble de paramètres d'accès à la voie pour un service porté par le premier dispositif en fonction du rang de la priorité du premier BSS parmi les priorités des BSS comprenant les dispositifs qui se disputent l'accès à la voie dans un cas dans lequel la priorité du service porté par le premier dispositif est la même que des propriétés de services portés par les autres dispositifs qui se disputent l'accès à la voie, un rang élevé de la priorité du premier BSS parmi les priorités de tous les BSS comprenant les dispositifs qui se disputent l'accès à la voie correspondant à une priorité élevée du premier dispositif pour accéder à la voie qui est indiquée par l'ensemble de paramètres d'accès à la voie.

13. Dispositif selon la revendication 10, dans lequel le module de détermination (81) est configuré pour déterminer une priorité d'accès à la voie correspondant à un service porté par chacun des dispositifs qui se disputent l'accès à la voie en fonction de la priorité du BSS comprenant le dispositif qui dispute l'accès à la voie et d'une priorité du service porté par le dispositif qui dispute l'accès à la voie, et déterminer l'ensemble de paramètres d'accès à la voie pour un service porté par le premier dispositif en fonction d'un rang d'une priorité d'accès à la voie correspondant au service porté par le premier dispositif parmi des priorités d'accès à la voie correspondant à des services portés par les dispositifs qui se disputent l'accès à la voie, un rang élevé de la priorité d'accès à la voie correspondant au service porté par le premier dispositif parmi les priorités d'accès à la voie correspondant à des services portés par les dispositifs qui se disputent l'accès à la voie correspondant à une priorité élevée du premier dispositif pour accéder à la voie qui est indiquée par l'ensemble de paramètres d'accès à la voie.

determine a channel access parameter set to be used by a first device in a
first BSS for accessing a channel according to at least one priority parameter,
where the channel access parameter set is used for indicating a priority of the
first device to access the channel among all devices that contend for accessing
the channel, and the at least one priority parameter includes a priority of each
of BSSs including devices that contend for accessing the channel

101

transmit the channel access parameter set to the first device to enable the first
device to perform channel access based on the channel access parameter set

102

## Figure 1

a device included
in the BSS the
value of the priority
of which is 2

| VO | VI | BE | BK |
|----|----|----|----|

a device included
in the BSS the
value of the priority
of which is 1

| VO | VI | BE | BK |
|----|----|----|----|

the priority to
access the channel

high ───────────────────────► low

## Figure 2

the value of the priority of the BSS including the first device is 2

| VO | VI | BE | BK |

the value of the priority of the BSS including the first device is 1

| VO | VI | BE | BK |

the priority to access the channel

high ⟶ low

# Figure 3

priorities of services, in order of 0, 1, 2 and 3; corresponding channel access priorities, in order of 0, 1, 2 and 3

a device included in the BSS the value of the priority of which is 1

| VO | VI | BE | BK |

priorities of services, in order of 0, 1, 2 and 3; corresponding channel access priorities, in order of 1, 2, 3 and 4

a device included in the BSS the value of the priority of which is 2

| VO | VI | BE | BK |

priorities of services, in order of 0, 1, 2 and 3; corresponding channel access priorities, in order of 2, 3, 4 and 5

a device included in the BSS the value of the priority of which is 3

| VO | VI | BE | BK |

low ⟶ high

# Figure 4

| IFSN | CW |
|------|-----|

**Figure 5**

| element ID | length | channel access priority algorithm | first-priority channel access parameter set to access the channel | second-priority channel access parameter set to access the channel | third-priority channel access parameter set to access the channel | fourth-priority channel access parameter set to access the channel | reserved field |
|---|---|---|---|---|---|---|---|

**Figure 6**

| element ID | length | QoS information field | BSS priority enabled bit | channel access priority algorithm | first-priority channel access parameter set to access the channel | second-priority channel access parameter set to access the channel | third-priority channel access parameter set to access the channel | fourth-priority channel access parameter set to access the channel | reserved field |
|---|---|---|---|---|---|---|---|---|---|

**Figure 7**

81                                                                82

determination module                    transmission module

device for transmitting a channel access parameter

**Figure 8**

95                    93                    91

receiver            transmitter            processor

94                    92                    memory

device for transmitting a
channel access parameter

**Figure 9**

**EP 3 046 388 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009279427 A1
- US 2008144588 A1